# EUROPEAN PATENT SPECIFICATION

(11) **EP 4 542 335 B1**
(45) Date of publication and mention of the grant of the patent: **28.10.2026**
(21) Application number: 24761830.9
(22) Date of filing: 04.09.2024
(51) Int. Cl.: G06F 1/16, G09F 9/30, H04M 1/02

(54) **FLEXIBLE DISPLAY AND ELECTRONIC DEVICE COMPRISING SAME**
FLEXIBLE ANZEIGE UND ELEKTRONISCHE VORRICHTUNG DAMIT
ÉCRAN SOUPLE ET DISPOSITIF ÉLECTRONIQUE LE COMPRENANT

(30) Priority: 04.09.2023 KR 20230116779; 04.10.2023 KR 20230131611
(43) Date of publication of application: 23.04.2025
(73) Proprietor: Samsung Electronics Co., Ltd, Suwon-si, Gyeonggi-do 16677 (KR)
(72) Inventor: LEE, Junwon, Suwon-si, Gyeonggi-do 16677 (KR)
(74) Representative: HGF
(86) International application number: PCT/KR2024/013343
(87) International publication number: WO 2025/053614

(56) References cited:
- CN-A- 114 244 933
- CN-A- 114 244 933
- KR-A- 20120 002 084
- KR-A- 20170 081 559
- KR-A- 20200 122 479
- KR-A- 20200 122 479
- KR-A- 20210 130 140
- US-A1- 20240 357 757

## Description

### [Technical Field]

Various embodiments of the disclosure relate to an electronic device, e.g., a flexible display and an electronic device including the same.

### [Background Art]

Advancing information communication technologies and semiconductor technologies accelerate the spread and use of various electronic devices. In particular, recent electronic devices are being developed to carry out communication while carried on.

The term "electronic device" may mean a device performing a particular function according to its equipped program, such as a home appliance, an electronic scheduler, a portable multimedia player, a mobile communication terminal, a tablet PC, a video/sound device, a desktop PC or laptop computer, a navigation for automobile, etc. For example, the electronic devices may output stored information as voices or images. As electronic devices are highly integrated, and high-speed, high-volume wireless communication becomes commonplace, an electronic device, such as a mobile communication terminal, is recently being equipped with various functions. For example, an electronic device comes with the integrated functionality, including an entertainment function, such as playing video games, a multimedia function, such as replaying music/videos, a communication and security function for mobile banking, and a scheduling or e-wallet function. These electronic devices have been downsized to be conveniently carried by users.

As mobile communication services extend up to multimedia service sectors, the display of the electronic device may be increased (in other words, the display area, or size of the display area presented to the user and/or usable by the user to view and/or interact with material displayed on the display area, may be increased) to allow the user satisfactory use of multimedia services as well as voice call or text messaging services. Accordingly, a foldable flexible display may be disposed on the entire area of the housing structure separated to be foldable.

The above-described information may be provided as related art for the purpose of helping understanding of the disclosure. No claim or determination is made as to whether any of the foregoing is applicable as background art in relation to the disclosure.
Document KR 2020 0122479 A discloses, according to its abstract, a foldable smartphone which can increase a screen by being made in a structure which can be folded or unfolded. As a structure to solve the problem of getting wrinkles in a process of folding or unfolding a flexible display, the foldable smartphone allows the flexible display to be moved in response to a change in length when the smartphone is folded or unfolded. In addition, the smartphone has a structure which can extend the screen in a longitudinal direction, while being a foldable smartphone.
Document CN 114 244 933 A discloses, according to its abstract, electronic equipment, which comprises a first equipment main body, a second equipment main body, a rotating mechanism and a flexible display screen, and is characterized in that the flexible display screen comprises a first display screen, a second display screen and a third display screen; the first equipment main body is rotationally connected with the second equipment main body through the rotating mechanism; the first display screen is connected with the second display screen through the third display screen; the first equipment main body is connected with the first display screen, and the second equipment main body is connected with the second display screen; the rotating mechanism comprises a rotating shaft, a transmission device and an ejector rod, the rotating shaft is connected with the ejector rod through the transmission device, and at least one of the first equipment body and the second equipment body is connected with the ejector rod; under the condition that the electronic equipment is switched from the folding state to the unfolding state, the rotating shaft drives the ejector rod to be far away from the rotating shaft through the transmission device; when the electronic equipment is switched from the unfolding state to the folding state, the rotating shaft drives the ejector rod to be close to the rotating shaft through the transmission device.

### [Disclosure of Invention]

### [Solution to Problems]

The scope of protection conferred is determined from the claims.

Disclosed herein is that an electronic device may comprise a first housing, a second housing, a first hinge (which may also be described as a first hinge module, assembly, structure, system, unit, or mechanism), and/or a flexible display. The first housing may include a first sub housing portion and/or a second sub housing portion. The second sub housing portion may be configured to move (e.g. translate, extend, separate, or slide, such as in a linear or radial (with respect to a rotation axis) direction), with respect to the first sub housing portion. In other words, in certain examples the second sub housing portion may be moveably coupled to the first sub housing portion. At least part of the first hinge (e.g. first hinge assembly) may be connected to the first housing and the second housing. In other words, the first hinge may couple the first housing to the second housing. The flexible display may be disposed on the first housing and the second housing and/or may be arranged to be supported by the first and second housings . The first hinge assembly may include a hinge cover, a first pin gear (which may also be described as a first pinion gear), and/or a first link structure or mechanism. The first pin gear may be rotatably coupled to the hinge cover. The first link structure may be dynamically connected to the first pin gear. The first link structure may be configured to provide a force to move the second sub housing portion in a direction away from or close to the first sub housing portion based on rotation of the first pin gear.

Also disclosed herein is that an electronic device may comprise a first housing, a second housing, a first hinge assembly, and/or a flexible display. The first housing may include a first sub housing portion and/or a second sub housing portion. The second sub housing portion may be configured to move with respect to the first sub housing portion. The second housing may include a third sub housing portion and/or a fourth sub housing portion. The fourth sub housing portion may be configured to move with respect to the third sub housing portion. The first hinge assembly may be connected to the first housing and the second housing. The flexible display may be disposed on the first housing and the second housing. The first hinge assembly may include a hinge cover, a hinge bracket, a first hinge structure, and/or a second hinge structure. The hinge bracket may be disposed on the hinge cover. The first hinge structure may be at least partially disposed on the hinge cover. The first hinge structure may be connected to the first housing. The second hinge structure may be at least partially disposed on the hinge cover. The second hinge structure may be connected to the second housing.

Also disclosed herein is that an electronic device comprises a first housing, a second housing, a display supported by the first and second housings, and a first hinge (or first hinge module, assembly, structure, system, unit, or mechanism) connecting the first housing to the second housing such that a configuration of the first and second housings can be changed between a folded configuration or state (e.g. in which the first and second housings face each other) and an unfolded configuration or state (e.g. in which the first and second housings are positioned side by side, facing in the same direction). In such an example, the first housing may comprise a first housing portion (e.g. a first sub housing portion) adjacent (and/or proximal) the first hinge, and a second housing portion (e.g. a second housing sub-portion) movably coupled to the first housing portion and distal the first hinge. Thus, the first hinge may be located at one side of the first housing portion, and the second housing portion may be located at an opposite side of the first housing portion. The electronic device may further comprise a first mechanism (e.g. a first extension mechanism, or first expansion/retraction mechanism) arranged to extend (e.g. translate, move, displace) the second housing portion in a direction away from the first housing portion (e.g. to provide an increased display area, or an increased display support area) as the configuration of the first and second housings is changed from the folded state to the unfolded state, and retract (e.g. translate, move, displace) the second housing portion in a direction towards the first housing portion (e.g. to provide a reduced display area, or a reduced display support area) as the configuration of the first and second housings is changed from the unfolded state to the folded state. The direction away from the first housing portion may be a radially outward direction, away from an axis of rotation of the first housing as the device is unfolded, and the direction towards the first housing portion may be a radially inwards direction, towards that axis as the device is folded.

Also disclosed herein is that a foldable electronic device comprises a first housing, a second housing, a hinge connecting the first and second housings, a display supported by the first and second housings, and an extension mechanism arranged to: extend a display support area provided by at least one of the first and second housings; and/or extend a viewable area of the display supported by at least one of the first and second housings, as a configuration of the device is changed from a folded state to an unfolded state. The extension mechanism may, for example, be arranged to move a second housing portion of the first housing relative to a first housing portion of the first housing portion as the device configuration is changed between the folded and unfolded states. The extension mechanism may also be arranged to: reduce a display support area provided by at least one of the first and second housings; and/or reduce a viewable area of the display supported by at least one of the first and second housings, as a configuration of the device is changed from the unfolded state to the folded state. The extension mechanism may be arranged to extend a display area of (or on, or supported by) one or both of the first and second housings as the device is changed from the folded to the unfolded state, and to reduce the display area of (or on, or supported by) one or both of the first and second housings as the device is changed from the unfolded to the folded state. This may be achieved by expanding and then retracting the radially outermost housing portions (or sub portions), distal the hinge, relative to the radially innermost housing portions, as the device is unfolded and then folded.

The extension mechanism of any of the above-mentioned examples may be part of a hinge mechanism, or separate from a hinge mechanism, and may comprise at least one rotatable gear comprising a helical groove, a sliding member engaging the helical groove, and a linkage mechanism actuated by the sliding member.

### [Brief Description of Drawings]

FIG. 1 is a block diagram illustrating an electronic device in a network environment according to an embodiment;
FIG. 2 is a view illustrating a folded state of an electronic device according to an embodiment of the disclosure;
FIG. 3 is a view illustrating an unfolded state of an electronic device according to an embodiment of the disclosure;
FIG. 4 is a plan view illustrating a folded state of an electronic device according to an embodiment of the disclosure;
FIG. 5 is a side view illustrating a folded state of an electronic device according to an embodiment of the disclosure;
FIG. 6 is a plan view illustrating an unfolded state of an electronic device according to an embodiment of the disclosure;
FIG. 7 is a side view illustrating an unfolded state of an electronic device according to an embodiment of the disclosure;
FIG. 8 is a plan view illustrating a hinge structure in a folded state of an electronic device according to an embodiment of the disclosure;
FIG. 9 is a plan view illustrating a hinge structure in an unfolded state of an electronic device according to an embodiment of the disclosure;
FIG. 10 is a perspective view illustrating a hinge structure in a folded state of an electronic device according to an embodiment of the disclosure;
FIG. 11 is a perspective view illustrating a hinge structure in an unfolded state of an electronic device according to an embodiment of the disclosure;
FIG. 12 is a plan view illustrating an unfolded state of an electronic device according to an embodiment of the disclosure;
FIG. 13 is a side view illustrating a flexible display and a display support member according to an embodiment of the disclosure;
FIG. 14 is an exploded perspective view illustrating a flexible display and a display support member according to an embodiment of the disclosure; and
FIG. 15 is a side view illustrating a flexible display in an unfolded state of an electronic device according to an embodiment of the disclosure.

### [Mode for the Invention]

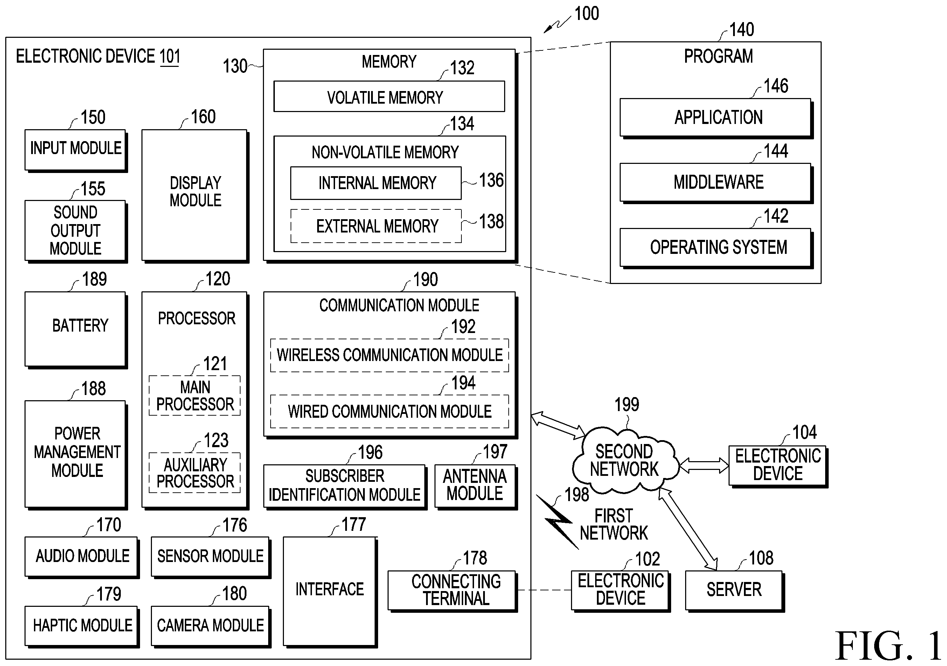

FIG. 1 is a block diagram illustrating an electronic device 101 in a network environment 100 according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

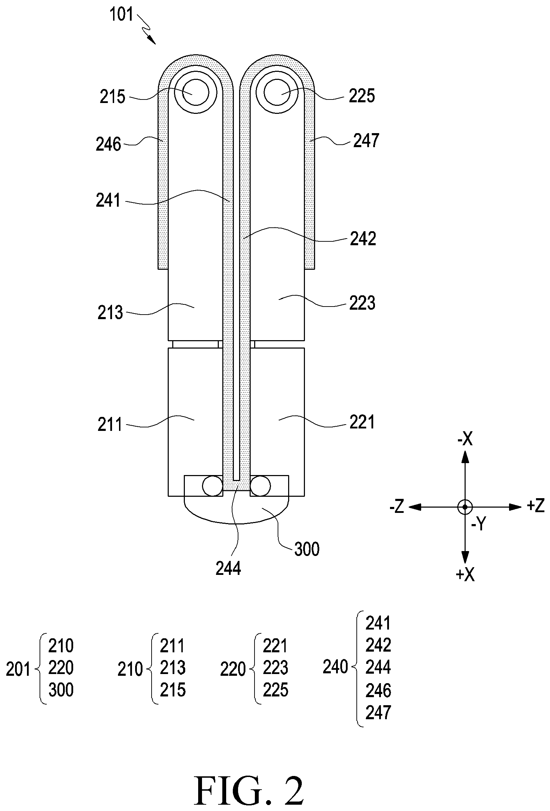

Hereinafter, for convenience of description, a spatial coordinate system (or Cartesian coordinate system) including the X axis, Y axis, or Z axis is shown in FIGS. 2 to 15. The X-axis direction, Y-axis direction, or Z-axis direction is defined or described with respect to the first housing 210, but is not limited thereto.

FIG. 2 is a view illustrating a folded state of an electronic device according to an embodiment of the disclosure.

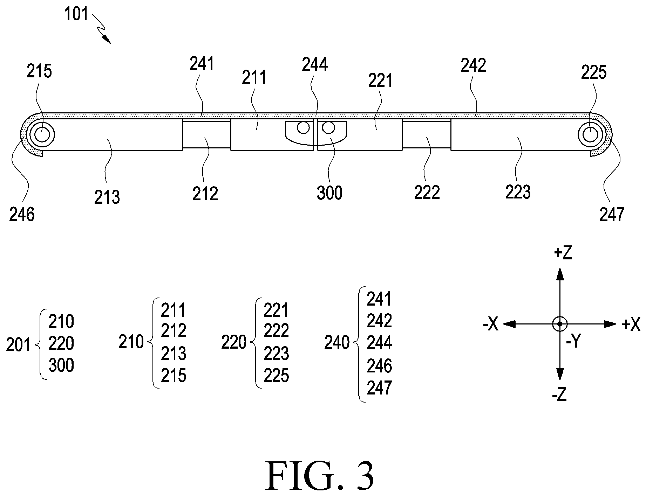

FIG. 3 is a view illustrating an unfolded state of an electronic device according to an embodiment of the disclosure;
FIG. 2 is a view illustrating a foldedstate among folding states of an electronic device 101 (or a foldable electronic device 101) according to an embodiment of the disclosure. FIG. 3 is a view illustrating an unfolded state among folding states of the electronic device 101 (or a foldable electronic device) according to an embodiment of the disclosure. The electronic device 101 of FIGS. 2 and 3, as an example of the electronic device 101 shown in FIG. 1, may be a foldable or bendable electronic device.

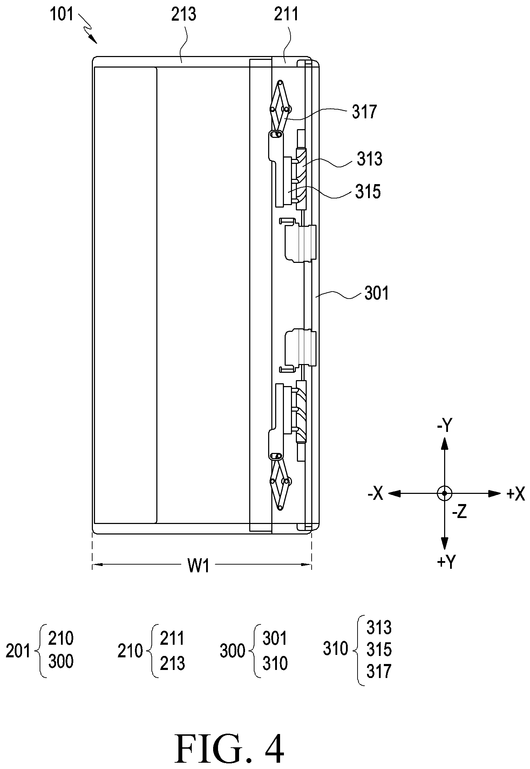

The embodiments of FIGS. 2 and 3 may be combined with the embodiment of FIG. 1 or the embodiments of FIGS. 4 to 15.

The configuration of the electronic device 101 of FIGS. 2 and 3 may be identical in whole or part to the configuration of the electronic device 101 of FIG. 1.

Referring to FIGS. 2 and 3, according to an embodiment, an electronic device 101 may include a housing 201 and a flexible or foldable display (hereinafter, simply " flexible display 240") (e.g., the display module 160 of FIG. 1) disposed in a space formed by the housing 201. According to an embodiment, the surface where the flexible display 240 is disposed (or the surface where the flexible display 240 is viewed from the outside of the electronic device 101) may be defined as the front surface of the electronic device 101. The opposite surface of the front surface may be defined as a rear surface of the electronic device 101. The surface surrounding the space between the front and rear surfaces may be defined as a side surface of the electronic device 101.

According to an embodiment, the housing 201 may be defined and/or referred to as a deformable housing 201 or a foldable housing 201.

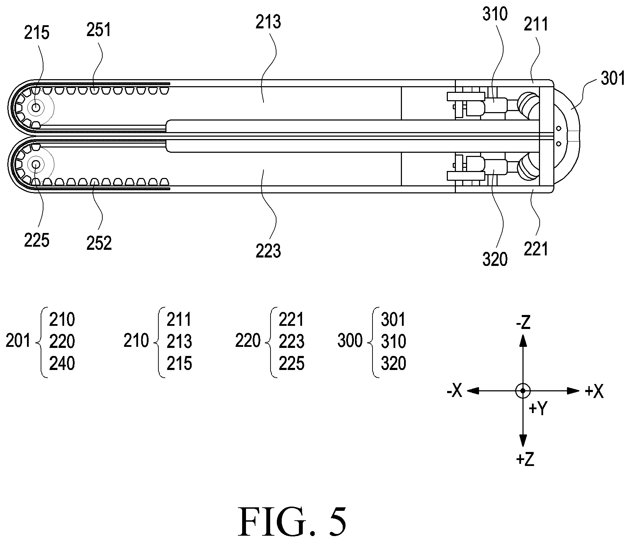

According to an embodiment, the housing 201 may include a first housing 210, a second housing 220, and/or a first hinge (or first hinge assembly) 300. According to an embodiment, the first hinge assembly 300 may include a hinge cover 301 (e.g., the hinge cover 301 of FIGS. 4 and 5) that covers the foldable portion of the housing 201. The foldable housing 201 of the electronic device 101 is not limited to the shape and combination shown in FIGS. 2 and 3, but may be implemented in a different shape.

According to an embodiment, the first housing 210 may be connected to the first hinge assembly 300 and may include a first front surface facing in a first direction and a first rear surface facing in a direction opposite to the first direction. The second housing 220 may be connected to the first hinge assembly 300 and may include a second front surface facing in a second direction and a second rear surface facing in a direction opposite to the second direction. The first housing 210 may rotate about the hinge assembly, with respect to the second housing 220. The second housing 220 may rotate about the hinge assembly 1230 with respect to the first housing 210. The electronic device 101 may transform (i.e. change state or configuration) to a folded state or an unfolded state.

According to an embodiment, the first housing 210 may include a first sub housing portion 211 and a second sub housing portion 213 configured to be movable relative to the first sub housing portion 211. The first sub housing portion 211 may be connected to the first hinge assembly 300. The second sub housing portion 213 may be moved in the direction away from the first sub housing portion 211 or may be moved in the direction close to (towards) the second sub housing portion 213 based on a force provided from the first hinge assembly 300 (e.g. by an extension mechanism). For example, the movement of the second sub housing portion 213 in the direction away from the first sub housing portion 211 may be defined and/or interpreted as the movement of the second sub housing portion 213 in the direction away from the first hinge assembly 300, and this may also be referred to as movement in a radially outwards direction, relative to a first rotational axis of the hinge assembly, about which the first housing rotates as the device is opened from the folded (closed) state to the unfolded (open) state. The movement of the second sub housing portion 213 in the direction close to (i.e. towards) the first sub housing portion 211 may be defined and/or interpreted as the movement of the second sub housing portion 213 in the direction close to (i.e. towards) the first hinge assembly 300, or, in other words, a radially inwards direction. The movements of the second sub housing portion relative to the first sub housing portion may be described as translational movements (or relative translations).

According to an embodiment, the second housing 220 may include a third sub housing portion 221 or a fourth sub housing portion 223 configured to be relatively movable with respect to the third sub housing portion 221. The third sub housing portion 221 may be connected to the first hinge assembly 300. The fourth sub housing portion 223 may be moved in the direction away from the third sub housing portion 221 or may be moved in the direction close to (towards) the fourth sub housing portion 223 based on a force provided from the first hinge assembly 300 (e.g. by an extension mechanism). For example, the movement of the fourth sub housing portion 223 in the direction away from the third sub housing portion 221 may be defined and/or interpreted as the movement of the fourth sub housing portion 223 in the direction away from the first hinge assembly 300, and this may also be referred to as movement in a radially outwards direction, relative to a second rotational axis of the hinge assembly, about which the second housing 220 rotates as the device is opened from the folded (closed) state to the unfolded (open) state. The movement of the fourth sub housing portion 223 in the direction close to (towards) the third sub housing portion 221 may be defined and/or interpreted as the movement of the fourth sub housing portion 223 in the direction close to (towards) the first hinge assembly 300, or, in other words, a radially inwards direction. The movements of the fourth sub housing portion relative to the third sub housing portion may be described as translational movements (or relative translations). In certain embodiments, the first and second rotational axes may be different from one another (e.g. parallel to each other) and in alternative embodiments may be the same as each other.

According to an embodiment, the first sub housing portion 211 may rotate about the first hinge assembly 300 with respect to the third sub housing portion 221. When the first sub housing portion 211 is folded about the first hinge assembly 300 with respect to the third sub housing portion 221 (e.g., FIG. 2), the front surface of the first housing 210 may face the front surface of the second housing 220. When the first sub housing portion 211 is unfolded about the first hinge assembly 300 with respect to the third sub housing portion 221 (e.g., FIG. 3), the front surface of the first housing 210 and the front surface of the second housing 220 may form a substantially flat surface.

According to an embodiment, when the state of the electronic device 101 is changed from the folded state (e.g., FIG. 2) to the unfolded state (e.g., FIG. 3), the second sub housing portion 213 may be moved (or, in other words, displaced, translated, linearly translated, moved radially outwards, slid, or extended) in the direction away from the first sub housing portion 211 and/or the first hinge assembly 300 based on the force provided from the first hinge assembly 300. For example, as the second sub housing portion 213 moves in the direction relatively away from the first sub housing portion 211, the first front surface of the first housing 210 may be relatively extended (or in other words, made larger; its area may be increased).

According to an embodiment, when the state of the electronic device 101 is changed from the unfolded state (e.g., FIG. 3) to the folded state (e.g., FIG. 2), the second sub housing portion 213 may be moved in the direction close to (i.e. towards, and radially inwards relative to) the first sub housing portion 211 and/or the first hinge assembly 300 based on the force provided from the first hinge assembly 300. For example, as the second sub housing portion 213 moves in the direction relatively close to (towards) the first sub housing portion 211, the first front surface of the first housing 210 may be relatively shrunken (or, in other words, made smaller; its area may be decreased).

According to an embodiment, when the state of the electronic device 101 is changed from the folded state (e.g., FIG. 2) to the unfolded state (e.g., FIG. 3), the fourth sub housing portion 223 may be moved in the direction away from the third sub housing portion 221 and/or the first hinge assembly 300 based on the force provided from the first hinge assembly 300. For example, as the fourth sub housing portion 223 moves in the direction relatively away from the third sub housing portion 221, the second front surface of the second housing 220 may be relatively extended.

According to an embodiment, when the state of the electronic device 101 is changed from the unfolded state (e.g., FIG. 3) to the folded state (e.g., FIG. 2), the fourth sub housing portion 223 may be moved in the direction close to the third sub housing portion 221 and/or the first hinge assembly 300 based on the force provided from the first hinge assembly 300. For example, as the fourth sub housing portion 223 moves in the direction relatively close to the third sub housing portion 221, the second front surface of the second housing 220 may be relatively reduced.

According to an embodiment, the first housing 210 may further include a fifth sub housing portion 212. The fifth sub housing portion 212 may be coupled to the first sub housing portion 211. The second sub housing portion 213 may be coupled or disposed to be relatively slidable with respect to the fifth sub housing portion 212. The fifth sub housing portion 212 may be sealed (or enclosed) by the first sub housing portion 211 and the second sub housing portion 213 in a state (e.g., FIG. 2) in which the first front surface of the first housing 210 is shrunken (or contracted, reduced, or minimized). The fifth sub housing portion 212 may be at least partially exposed to the outside of the first sub housing portion 211 and the second sub housing portion 213 in a state in which the first front surface of the first housing 210 is extended (or expanded, increased, or maximized) (e.g., FIG. 3). The fifth sub housing portion 212 may provide a guide structure (or rail structure) for the second sub housing portion 213 to slide.

According to an embodiment, the second housing 220 may further include a sixth sub housing portion 222. The sixth sub housing portion 222 may be coupled to the third sub housing portion 221. The fourth sub housing portion 223 may be coupled or disposed to be relatively slidable with respect to the sixth sub housing portion 222. The sixth sub housing portion 222 may be sealed by the third sub housing portion 221 and the fourth sub housing portion 223 in a state (e.g., FIG. 2) in which the second front surface of the second housing 220 is shrunken. The sixth sub housing portion 222 may be at least partially exposed to the outside of the third sub housing portion 221 and the fourth sub housing portion 223 in a state in which the second front surface of the second housing 220 is extended (e.g., FIG. 3). The sixth sub housing portion 222 may provide a guide structure (or rail structure) for the fourth sub housing portion 223 to slide.

According to an embodiment, the first hinge assembly 300 may be connected to the first housing 210 and the second housing 220. For example, at least a portion of the first hinge assembly 300 may be connected to the first housing 210 and the second housing 220. For example, the first hinge assembly 300 may be connected to the first sub housing portion 211 and the third sub housing portion 221. The first hinge assembly 300 may be connected to the first sub housing portion 211 and the second sub housing portion 213 so that the first sub housing portion 211 and the third sub housing portion 221 are rotatable with respect to each other. According to an embodiment, the first hinge assembly 300 may include a folding axis, and the first housing 210 and the second housing 220 may rotate about the folding axis with respect to each other.

According to an embodiment, in the fully folded state of the electronic device 101, the first front surface of the first housing 210 and the second front surface of the second housing 220 may face each other. In the electronic device 101, in the fully unfolded state, the first front surface of the first housing 210 and the second front surface of the second housing 220 may form a substantially flat surface. For example, in the fully unfolded state of the electronic device 101, the first front surface of the first housing 210 and the second front surface of the second housing 220 may face in substantially the same direction (e.g., the +Z direction of FIG. 3).

According to an embodiment, the first housing 210 and the second housing 220 may be disposed on two opposite sides of the folding axis of the first hinge assembly 300, and may be shaped to be overall symmetrical with respect to the folding axis of the first hinge assembly 300. As described below, the angle or distance between the first housing 210 and the second housing 220 may be varied depending on whether the electronic device 101 is in the unfolded state, the folded state, or the partially unfolded (or partially folded) intermediate state.

According to an embodiment, the first housing 210 and the second housing 220 together may form a recess that accommodates the flexible display 240. According to an embodiment, at least a portion of the first housing 210 and the second housing 220 may be formed of a metallic material or a non-metallic material having rigidity of a selected size for supporting the flexible display 240. At least a portion formed of the metallic material may provide a ground plane of the electronic device 101 and may be electrically connected to a ground line formed on a printed circuit board disposed inside the housing 201.

According to an embodiment, various components of the electronic device 101 may be disposed in the inner space of the electronic device 101 formed by the first housing 210 and the second housing 220. Various components of the electronic device 101 include a printed circuit board, a processor (e.g., the processor 120 of FIG. 1), memory (e.g., the memory 130 of FIG. 1), an input module (e.g., the input module 150 of FIG. 1), a sound output module (e.g., the sound output module 155 of FIG. 1), an audio module (e.g., the audio module 170 of FIG. 1), a sensor module (e.g., the sensor module 176 of FIG. 1), an interface (e.g., the interface 177 of FIG. 1), a connecting terminal (e.g., the connecting terminal 178 of FIG. 1), a haptic module (e.g., the haptic module 179 of FIG. 1), a camera module (e.g., the camera module of FIG. 1), a battery (e.g., the battery 189 of FIG. 1), a communication module (e.g., the communication module 190 of FIG. 1), a subscriber identification module (e.g., the subscriber identification module 196 of FIG. 1), or an antenna module (e.g., the antenna module 197 of FIG. 1) but, without limitations thereto, may omit some of the above-described components or add more components.

According to an embodiment, the hinge cover 301 (e.g., the hinge cover 301 of FIG. 5) included in the first hinge assembly 300 may be disposed between the first housing 210 and the second housing 220 to cover an internal component (e.g., the first hinge structure 310 or the second hinge structure 320 of FIG. 5). According to an embodiment, the first hinge assembly 300 may be covered by a portion of the first housing 210 and the second housing 220 or may be exposed to the outside according to the state (an unfolded state, an intermediate state, or a folded state) of the electronic device 101.

According to an embodiment, when the electronic device 101 is in the unfolded state (e.g., the fully unfolded state) (e.g., FIG. 3), the first hinge assembly 300 may be covered by the first housing 210 and the second housing 220 not to be exposed. According to an embodiment, when the electronic device 101 is in the folded state (e.g., the fully folded state) (e.g., FIG. 2), the first hinge assembly 300 may be exposed to the outside between the first housing 210 and the second housing 220. As an embodiment, in the intermediate state in which the first housing 210 and the second housing 220 are folded with a certain angle, the first hinge assembly 300 may be partially exposed to the outside between the first housing 210 and the second housing 220. However, in this case, the exposed area may be smaller than that in the completely folded state. In an embodiment, the first hinge assembly 300 may include a curved surface.

According to an embodiment, the flexible display 240 may be disposed in a space formed by the housing 201. For example, the flexible display 240 may be seated in a recess formed by the housing 201 and may be viewed from the outside through the front surface (e.g., the first front surface and/or the second front surface) of the electronic device 101. According to an embodiment, the flexible display 240 may constitute most of the front surface (e.g., the first front surface and/or the second front surface) of the electronic device 101. Accordingly, the front surface (e.g., the first front surface and/or the second front surface) of the electronic device 101 may include the flexible display 240 and a partial area of the first housing 210 and a partial area of the second housing 220 adjacent to the flexible display 240.

According to an embodiment, the flexible display 240 may refer to a display in which at least a partial area thereof may be deformed into a flat surface or a curved surface. According to an embodiment, the flexible display 240 may include a first folding area 244, a first display area 241 disposed on one side (e.g., the left side of the first folding area 244 illustrated in FIG. 3) of the first folding area 244, and a second display area 242 disposed on the other side (e.g., the right side of the first folding area 244 illustrated in FIG. 3). Further, the flexible display 240 may further include a first extended area 246 extending from the first display area 241 and a second extended area 247 extending from the second display area 242.

According to an embodiment, the first display area 241 may be disposed on the first housing 210, and the second display area 242 may be disposed on the second housing 220. According to an embodiment, the first folding area 244 may connect the first display area 241 and the second display area 242, and may be disposed on the first hinge assembly 300.

According to an embodiment, the first extended area 246 may extend from the first display area 241. The first extended area 246 may be accommodated in the second sub housing portion 213 when the state of the electronic device 101 is the folded state (e.g., FIG. 2). When the electronic device 101 is in the unfolded state (e.g., FIG. 3), the first extended area 246 may be at least partially exposed to the outside of the second sub housing portion 213 and may form a substantially flat surface with the first display area 241. For example, when the second sub housing portion 213 moves in the direction away from the first sub housing portion 211, at least a portion of the first extended area 246 may be configured to move from the inside of the second sub housing portion 213 to the outside of the second sub housing portion 213.

According to an embodiment, the second extended area 247 may extend from the second display area 242. The second extended area 247 may be accommodated in the fourth sub housing portion 223 when the electronic device 101 is in the folded state (e.g., FIG. 2). When the electronic device 101 is in the unfolded state (e.g., FIG. 3), the second extended area 247 may be at least partially exposed to the outside of the fourth sub housing portion 223 and may form a substantially flat surface with the second display area 242. For example, when the fourth sub housing portion 223 moves in the direction away from the third sub housing portion 221, at least a portion of the second extended area 247 may be configured to move from the inside of the fourth sub housing portion 223 to the outside of the fourth sub housing portion 223.

The area division of the flexible display 240 illustrated in FIGS. 2 and 3 is exemplary, and the flexible display 240 may be divided into a plurality of areas (e.g., two to four, or six or more) according to the structure or function.

According to an embodiment, the flexible display 240 may be coupled to or disposed adjacent to a touch panel having a pressure sensor capable of measuring the intensity (pressure) of touch or a touch sensing circuit. For example, as an example of the touch panel, the flexible display 240 may be coupled to or disposed adjacent to an electromagnetic induction panel for detecting an electromagnetic resonance (EMR)-type digital pen or a stylus pen (e.g., the input module 150 of FIG. 1).

According to an embodiment, the first display area 241 and the second display area 242 may be overall shaped to be symmetrical with respect to the first folding area 244.

Hereinafter, operations of the first housing 210 and the second housing 220 according to the state (e.g., the folded state, the unfolded state, or the intermediate state) of the electronic device 101 and each area are described.

According to an embodiment, when the electronic device 101 is in the folded state (e.g., FIG. 2), the first housing 210 and the second housing 220 may be disposed to face each other. When the electronic device 101 is in the folded state, as the second sub housing portion 213 is positioned relatively close to the first sub housing portion 211, the fifth sub housing portion 212 may not be exposed to the outside. When the electronic device 101 is in the folded state, as the fourth sub housing portion 223 is positioned relatively close to the third sub housing portion 221, the sixth sub housing portion 222 may not be exposed to the outside. The surface of the first display area 241 and the surface of the second display area 242 of the flexible display 240 may face each other while forming a narrow angle (e.g., between 0 degrees and 10 degrees). When the electronic device 101 is in the folded state, at least a portion of the first folding area 244 may be formed of a curved surface having a predetermined curvature. When the electronic device 101 is in the folded state, the first extended area 246 may be accommodated in the second sub housing portion 213, and the second extended area 247 may be accommodated in the fourth sub housing portion 223.

According to an embodiment, when the electronic device 101 is in the unfolded state (e.g., FIG. 3), the first housing 210 and the second housing 220 may be disposed to face in the same direction while forming an angle of 180 degrees. When the electronic device 101 is in the unfolded state, the second sub housing portion 213 may slide in the direction (e.g., the -X direction of FIG. 3) relatively away from the first sub housing portion 211, and the fifth sub housing portion 212 may be at least partially exposed to the outside. When the electronic device 101 is in the unfolded state, the fourth sub housing portion 223 may slide in the direction (e.g., the +X direction of FIG. 3) relatively away from the third sub housing portion 221, and the sixth sub housing portion 222 may be at least partially exposed to the outside. When the electronic device 101 is in the unfolded state, the surface of the first display area 241 and the surface of the second display area 242 of the flexible display 240 may form 180 degrees therebetween and may face in the same direction (e.g., the front direction of the electronic device 101). In this case, the first folding area 244 may form the same plane as the first display area 241 and the second display area 242. When the electronic device 101 is in the unfolded state, the first extended area 246 may be exposed on the front surface of the second sub housing portion 213. At least a portion of the first extended area 246 exposed to the outside of the second sub housing portion 213 may form the same plane as the first display area 241. When the electronic device 101 is in the unfolded state, the second extended area 247 may be exposed on the front surface of the fourth sub housing portion 223. At least a portion of the second extended area 247 exposed to the outside of the fourth sub housing portion 223 may form the same plane as the second display area 242.

According to an embodiment, as the second sub housing portion 213 and the fifth sub housing portion 212 slide in the unfolded state of the electronic device 101, the first front surface of the first housing 210 and the second front surface of the second housing 220 may be extended. **In** this case, as the first extended area 246 and the second extended area 247 are exposed on the front surfaces of the second sub housing portion 213 and the fourth sub housing portion 223, respectively, a large-area surface of the flexible display 240 may be provided.

According to an embodiment, when the electronic device 101 is in the intermediate state, the first housing 210 and the second housing 220 may be disposed at a certain angle. The surface of the first display area 241 and the surface of the second display area 242 of the flexible display 240 may form an angle larger than that in the folded state and smaller than that in the unfolded state. At least a portion of the first folding area 244 may be formed of a curved surface having a predetermined curvature, and the curvature in this case may be smaller than that in the folded state. Further, the size (or area) in which the first extended area 246 is exposed to the outside of the second sub housing portion 213 may be smaller than that in the unfolded state. The size (or area) in which the second extended area 247 is exposed to the outside of the fourth sub housing portion 223 may be smaller than that in the unfolded state.

According to an embodiment, the first housing 210 may further include a first curved surface 215. The first curved surface 215 may be disposed inside the second sub housing portion 213. When the state of the electronic device 101 is changed from the folded state to the unfolded state, the first extended area 246 may move while being guided by the first curved surface 215 and may be exposed to the outside of the second sub housing portion 213. When the state of the electronic device 101 is changed from the unfolded state, the first extended area 246 may move while being guided by the first curved surface 215 and may be accommodated in the second sub housing portion 213. For example, while the second sub housing portion 213 slides with respect to the first sub housing portion 211, a portion of the first extended area 246 may be deformed into a curved shape at a position corresponding to the first curved surface 215.

According to an embodiment, the second housing 220 may further include a second curved surface 225. The second curved surface 225 may be disposed inside the fourth sub housing portion 223. When the state of the electronic device 101 is changed from the folded state to the unfolded state, the second extended area 247 may while being guided by the second curved surface 225 and may be exposed to the outside of the fourth sub housing portion 223. When the state of the electronic device 101 is changed from the unfolded state, the second extended area 247 may move while being guided by the second curved surface 225 and may be accommodated in the fourth sub housing portion 223. For example, while the fourth sub housing portion 223 slides with respect to the third sub housing portion 221, a portion of the second extended area 247 may be deformed into a curved shape at a position corresponding to the second curved surface 225.

According to an embodiment, the first hinge assembly 300 may be connected to the first sub housing portion 211 and the second sub housing portion 213. The first hinge assembly 300 may provide a structure in which the first sub housing portion 211 and the second sub housing portion 213 are rotatable with respect to each other.

According to an embodiment, the first hinge assembly 300 may provide a force for allowing (or, in other words, urging) the second sub housing portion 213 to move in the direction away from the first sub housing portion 211 and a force for allowing (urging) the fourth sub housing portion 223 to move in the direction away from the third sub housing portion 221 when the state of the electronic device 101 is changed from the folded state to the unfolded state. For example, when the electronic device 101 is unfolded, the second sub housing portion 213 may slide in the direction away from the first sub housing portion 211 based on the force provided from the first hinge assembly 300. When the electronic device 101 is unfolded, the fourth sub housing portion 223 may slide in the direction away from the third sub housing portion 221 based on the force provided from the first hinge assembly 300.

According to an embodiment, when the state of the electronic device 101 is changed from the unfolded state to the folded state, the first hinge assembly 300 may provide a force for allowing (urging) the second sub housing portion 213 to move in the direction close to the first sub housing portion 211 and a force for allowing (urging) the fourth sub housing portion 223 to move in the direction close to the third sub housing portion 221. For example, when the electronic device 101 is folded, the second sub housing portion 213 may slide in the direction close to the first sub housing portion 211 based on the force provided from the first hinge assembly 300. When the electronic device 101 is folded, the fourth sub housing portion 223 may slide in the direction close to the third sub housing portion 221 based on the force provided from the first hinge assembly 300.

According to an embodiment, when the electronic device 101 is unfolded, as the second sub housing portion 213 moves in the direction away from the first sub housing portion 211, the surface of the first housing 210 may be extended. For example, the size of the first housing 210 may be extended. Further, as the first extended area 246 is exposed to the outside of the second sub housing portion 213, the area of the flexible display 240 exposed to the outside of the first housing 210 may be extended.

According to an embodiment, when the electronic device 101 is unfolded, as the fourth sub housing portion 223 moves in the direction away from the third sub housing portion 221, the surface of the second housing 220 may be extended. For example, the size of the second housing 220 may be extended. Further, as the second extended area 247 is exposed to the outside of the fourth sub housing portion 223, the area of the flexible display 240 exposed to the outside of the second housing 220 may be extended.

According to an embodiment, when the electronic device 101 is folded, as the second sub housing portion 213 approaches the first sub housing portion 211, the surface of the first housing 210 may be reduced. For example, the size of the first housing 210 may be decreased. Further, as the first extended area 246 is accommodated into the second sub housing portion 213, the area of the flexible display 240 exposed to the outside of the first housing 210 may be decreased.

According to an embodiment, when the electronic device 101 is folded, as the fourth sub housing portion 223 approaches the third sub housing portion 221, the surface of the second housing 220 may be decreased. For example, the size of the second housing 220 may be decreased. Further, as the second extended area 247 is accommodated into the fourth sub housing portion 223, the area of the flexible display 240 exposed to the outside of the second housing 220 may be decreased.

According to an embodiment, the folded state (e.g., FIG. 2) of the electronic device 101 may be defined and/or referred to as a first state of the electronic device 101, a closed state of the electronic device 101, or a shrunken state of the flexible display 240 of the electronic device 101. Further, the folded state of the electronic device 101 may be defined and/or referred to as a folded state of the housing 201.

According to an embodiment, the unfolded state (e.g., FIG. 3) of the electronic device 101 may be defined and/or referred to as a second state of the electronic device 101, an open state of the electronic device 101, or an extended state of the flexible display 240 of the electronic device 101. Further, the unfolded state of the electronic device 101 may be defined and/or referred to as the unfolded state of the housing 201.

FIG. 4 is a plan view illustrating a folded state of an electronic device according to an embodiment of the disclosure.

FIG. 5 is a side view illustrating a folded state of an electronic device according to an embodiment of the disclosure.

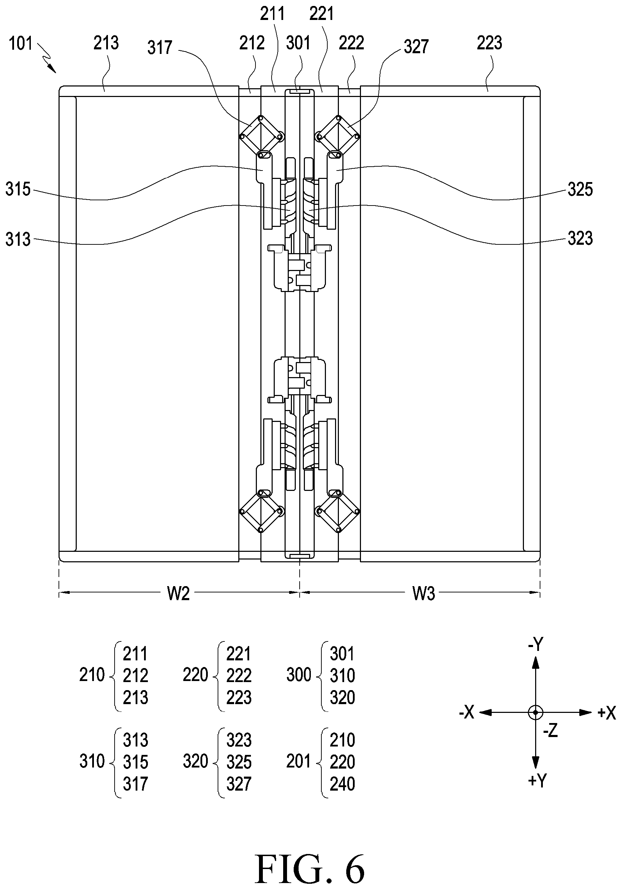

FIG. 6 is a plan view illustrating an unfolded state of an electronic device according to an embodiment of the disclosure.

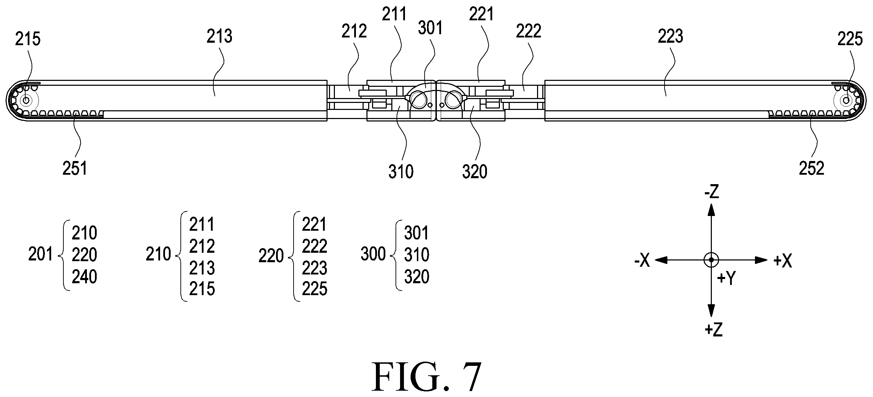

FIG. 7 is a side view illustrating an unfolded state of an electronic device according to an embodiment of the disclosure.

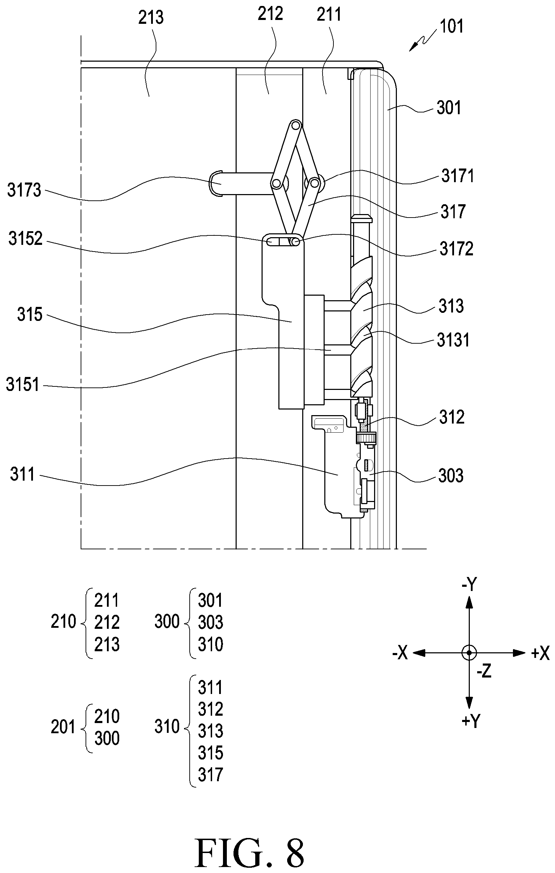

The embodiments of FIGS. 4 to 7 may be combined with the embodiments of FIGS. 1 to 3 or the embodiments of FIGS. 8 to 15.

Referring to FIGS. 4 to 7, an electronic device 101 (e.g., the electronic device 101 of FIG. 1 or the electronic device 101 of FIGS. 2 and 3) may include a housing 201, a first housing 210, a second housing 220, and/or a first hinge assembly 300.

The configuration of the housing 201, the first housing 210, the second housing 220, and/or the first hinge assembly 300 of FIGS. 4 to 7 may be identical in whole or part to the configuration of the housing 201, the first housing 210, the second housing 220, and/or the first hinge assembly 300 of FIGS. 2 and 3.

According to an embodiment, the first housing 210 may include a first sub housing portion 211 (e.g., the first sub housing portion 211 of FIGS. 2 and 3), a second sub housing portion 213 (e.g., the second sub housing portion 213 of FIGS. 2 and 3), a fifth sub housing portion 212 (e.g., the fifth sub housing portion 212 of FIGS. 2 and 3), and/or a first curved surface 215 (e.g., the first curved surface 215 of FIGS. 2 and 3).

According to an embodiment, the second housing 220 may include a third sub housing portion 221 (e.g., the third sub housing portion 221 of FIGS. 2 and 3), a fourth sub housing portion 223 (e.g., the fourth sub housing portion 223 of FIGS. 2 and 3), a sixth sub housing portion 222 (e.g., the sixth sub housing portion 222 of FIGS. 2 and 3), and/or a second curved surface 225 (e.g., the second curved surface 225 of FIGS. 2 and 3).

According to an embodiment, the first hinge assembly 300 may include a hinge cover 301, a first hinge structure 310, and/or a second hinge structure 320. According to an embodiment, the hinge cover 301 may be coupled to the first hinge structure 310 and/or the second hinge structure 320, and may cover the first hinge structure 310 and the second hinge structure 320 so that the first hinge structure 310 and the second hinge structure 320 are not exposed to the outside.

According to an embodiment, the first hinge structure 310 may be connected to the hinge cover 301 and the first housing 210 (e.g., the first sub housing portion 211). The second hinge structure 320 may be connected to the hinge cover 301 and the second housing 220 (e.g., the third sub housing portion 221).

According to an embodiment, a pair of first hinge structures 310 spaced apart from each other may be provided, but the disclosure is not limited thereto. A pair of second hinge structures 320 spaced apart from each other may be provided, but the disclosure is not limited thereto. Hereinafter, one first hinge structure 310 and one second hinge structure 320 are described as an example, but the description thereof may be equally applied and/or applied to the other first hinge structure 310 and the other second hinge structure 320.

According to an embodiment, the first hinge (e.g. the first hinge structure) 310 may include a first gear (e.g. a first pin gear) 313, a first guide (e.g. a first guide gear) 315, and/or a first link structure or mechanism 317. It will be appreciated that the first gear, first guide, and first link structure together form an expansion/retraction system arranged to automatically expand and then retract the first and second housings (by separating and then re-closing the respective sub-housing portions) as the device is unfolded and then folded. In certain embodiments, this expansion (or extension) and retraction system in certain embodiments forms part of the hinge mechanism, but in alternative embodiments may be separate from the hinge mechanism (or other hinge form).

According to an embodiment, the first pin gear 313 may have a pin shape. For example, it may comprise an elongate shaft portion and a toothed gear, or gear wheel portion. When the first sub housing portion 211 rotates relative to the hinge cover 301 (or the second sub housing portion 213) (e.g., when the first sub housing portion 211 rotates about the rotation axis parallel to the Y-axis direction of FIGS. 4 to 7), the first pin gear 313 may rotate about the axis of the first pin gear 313. The first pin gear 313 may be defined and/or referred to as a first helical gear 313. In other words, the shaft portion may comprise a helical groove extending along at least a portion of its length. The first pin gear 313 may be rotatably coupled to the hinge cover 301.

According to an embodiment, the first guide gear 315 may be dynamically connected to the first pin gear 313, for example by means of at least one member 3151 slidable engaged in the pin gear's helical groove 3131. The first guide gear 315 may slide in the vertical direction (e.g., the Y-axis direction of FIGS. 4 to 7) inside the first housing 210, based on the rotation of the first pin gear 313. In other words, as the device is unfolded, the pin gear is rotated relative to the first housing and the first guide 315 is moved in a linear direction (as a result of member 3151 being engaged in the helical groove), parallel to the rotational axis of the pin gear. This linear, or sliding movement of the first guide actuates a link structure, or linkage mechanism (described below) so as to expand the first housing by moving the second sub housing portion 213 linearly away from the first sub housing portion 211.

According to an embodiment, the first link structure 317 may include a plurality of links. According to the illustrated embodiment, a plurality of links are illustrated as four links, but the disclosure is not limited thereto. The first link structure 317 may be dynamically connected to the first guide gear 315. The first link structure 317 may be dynamically connected to the first pin gear 313. For example, the first link structure 317 may be dynamically connected to the first pin gear 313 through the first guide gear 315. The first link structure 317 may press the second sub housing portion 213 so that the second sub housing portion 213 moves in the direction away from the first sub housing portion 211 based on the sliding movement of the first guide gear 315. Further, the first link structure 317 may pull the second sub housing portion 213 so that the second sub housing portion 213 moves in the direction close to the first sub housing portion 211 based on the sliding movement of the first guide gear 315. The first link structure 317 may be configured to provide a force for moving the second sub housing portion 213 in the direction away from or close to the first sub housing portion 211 based on the rotation of the first pin gear 313.

According to an embodiment, the second hinge structure 320 may include a second pin gear 323, a second guide gear 325, or a second link structure 327.

According to an embodiment, the second pin gear 323 may have a pin shape. When the third sub housing portion 221 rotates relative to the hinge cover 301 (or the fourth sub housing portion 223) (e.g., when the third sub housing portion 221 rotates about the rotation axis parallel to the Y-axis direction of FIGS. 4 to 7), the second pin gear 323 may rotate about the axis of the second pin gear 323. The second pin gear 323 may be defined and/or referred to as a second helical gear 323. The second pin gear 323 may be rotatably coupled to the hinge cover 301.

According to an embodiment, the second guide gear 325 may be dynamically connected to the second pin gear 323. The second guide gear 325 may slide in the vertical direction (e.g., the Y-axis direction of FIGS. 4 to 7) inside the second housing 220 based on the rotation of the second pin gear 323.

According to an embodiment, the second link structure 327 may include a plurality of links. According to the illustrated embodiment, a plurality of links are illustrated as four links, but the disclosure is not limited thereto. The second link structure 327 may be dynamically connected to the second guide gear 325. The second link structure 327 may be dynamically connected to the second pin gear 323. For example, the second link structure 327 may be dynamically connected to the second pin gear 323 through the second guide gear 325. The second link structure 327 may press the fourth sub housing portion 223 so that the fourth sub housing portion 223 moves in the direction away from the third sub housing portion 221 based on the sliding movement of the second guide gear 325. Further, the second link structure 327 may pull the fourth sub housing portion 223 so that the fourth sub housing portion 223 moves in the direction close to the third sub housing portion 221 based on the sliding movement of the second guide gear 325. The second link structure 327 may be configured to provide a force for moving the fourth sub housing portion 223 in the direction away from or closer to the third sub housing portion 221 based on the rotation of the second pin gear 323.

According to an embodiment, the electronic device 101 may further include a first supporting structure 251 and/or a second supporting structure 252. The first supporting structure 251 may be disposed inside the second sub housing portion 213. The first supporting structure 251 may be configured to support a first extended area 246 (e.g., the first extended area 246 of FIGS. 2 and 3) of the flexible display 240 (e.g., the flexible display 240 of FIGS. 2 and 3). For example, the first supporting structure 251 may stably support the movement of the first extended area 246 which is deformed. The first supporting structure 251 may be provided as a multi-bar structure including a plurality of bars, or may be provided as one elastic plate. At least a portion of the first supporting structure 251 may have a curved shape corresponding to the first curved surface 215 on the first curved surface 215. The second supporting structure 252 may be disposed inside the fourth sub housing portion 223. The second supporting structure 252 may be configured to support a second extended area 247 (e.g., the second extended area 247 of FIGS. 2 and 3) of the flexible display 240 (e.g., the flexible display 240 of FIGS. 2 and 3). For example, the second supporting structure 252 may stably support the movement of the second extended area 247 which is deformed. The second supporting structure 252 may be provided as a multi-bar structure including a plurality of bars, or may be provided as one elastic plate. At least a portion of the second supporting structure 252 may have a curved shape corresponding to the second curved surface 225 on the second curved surface 225.

According to an embodiment, when the state of the electronic device 101 is changed from the folded state to the unfolded state, the first hinge structure 310 may provide the first housing 210 with a structure that allows (urges) the first sub housing portion 211 to stably rotate with respect to the hinge cover 301, and may provide the second sub housing portion 213 with a force that allows (urges) the second sub housing portion 213 to slide in the direction away from the first sub housing portion 211.

According to an embodiment, when the state of the electronic device 101 is changed from the unfolded state to the folded state, the first hinge structure 310 may provide the first housing 210 with a structure that allows (urges) the first sub housing portion 211 to stably rotate with respect to the hinge cover 301, and may provide the second sub housing portion 213 with a force that allows (urges) the second sub housing portion 213 to slide in the direction close to the first sub housing portion 211.

According to an embodiment, when the state of the electronic device 101 is changed from the folded state to the unfolded state, the second hinge structure 320 may provide the second housing 220 with a structure that allows (urges) the third sub housing portion 221 to stably rotate with respect to the hinge cover 301, and may provide the fourth sub housing portion 223 with a force that allows (urges) the fourth sub housing portion 223 to slide in the direction away from the third sub housing portion 221.

According to an embodiment, when the state of the electronic device 101 is changed from the unfolded state to the folded state, the second hinge structure 320 may provide the second housing 220 with a structure that allows (urges) the third sub housing portion 221 to stably rotate with respect to the hinge cover 301 and may provide the fourth sub housing portion 223 with a force that allows (urges) the fourth sub housing portion 223 to slide in the direction close to the third sub housing portion 221.

According to an embodiment, when the electronic device 101 is in the folded state (e.g., FIG. 2, FIG. 4, or FIG. 5), the first housing 210 and/or the second housing 220 may have a first width W1 (e.g., the width in the X-axis direction of FIG. 4). For example, the first width W1 may be smaller than the second width W2 (e.g., the width in the X-axis direction of FIG. 6) of the first housing 210 or the third width W3 (e.g., the width in the X-axis direction of FIG. 6) of the second housing 220 when the electronic device 101 is in the unfolded state (e.g., FIG. 3, FIG. 6, or FIG. 7).

According to an embodiment, when the electronic device 101 is in the unfolded state (e.g., FIG. 3, FIG. 6, or FIG. 7), the first housing 210 may have a second width W2 (e.g., the width in the X-axis direction of FIG. 6). The second housing 220 may have a third width W3 (e.g., a width in the X-axis direction of FIG. 6). The second width W2 may be substantially the same as the third width W3, but is not limited thereto. The second width W2 and/or the third width W3 may be larger than the first width W1. For example, in the unfolded state of the electronic device 101, as the second sub housing portion 213 moves away from the first sub housing portion 211, the first housing 210 may be extended. The second width W2 of the extended first housing 210 may be larger than the first width W1 of the shrunken first housing 210. For example, in the unfolded state of the electronic device 101, as the fourth sub housing portion 223 moves away from the third sub housing portion 221, the second housing 220 may be extended. The third width W3 of the extended second housing 220 may be larger than the first width W2 of the reduced second housing 220.

According to an embodiment, as the width of the housing 201 (e.g., the first housing 210 and/or the second housing 220) is extended in the unfolded state of the electronic device 101, the size (or area) of the flexible display 240 (e.g., the flexible display 240 of FIGS. 2 and 3) exposed to the outside of the housing 201 may be extended.

FIG. 8 is a plan view illustrating a hinge structure in a folded state of an electronic device according to an embodiment of the disclosure.

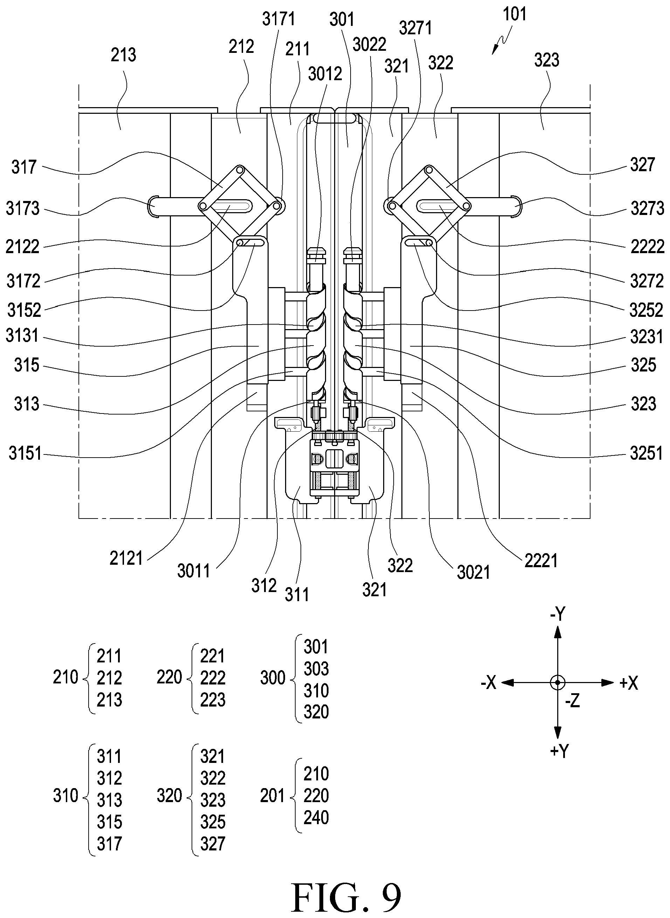

FIG. 9 is a plan view illustrating a hinge structure in an unfolded state of an electronic device according to an embodiment of the disclosure.

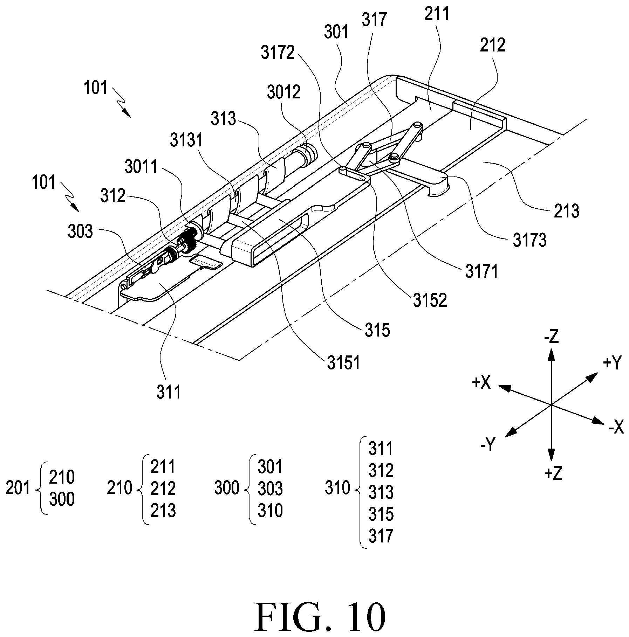

FIG. 10 is a perspective view illustrating a hinge structure in a folded state of an electronic device according to an embodiment of the disclosure.

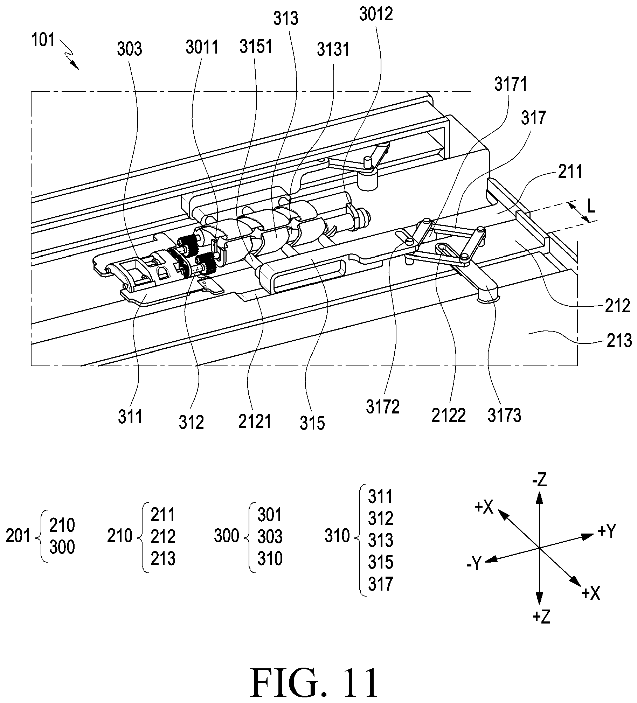

FIG. 11 is a perspective view illustrating a hinge structure in an unfolded state of an electronic device according to an embodiment of the disclosure.

The embodiments of FIGS. 8 to 11 may be combined with the embodiments of FIGS. 1 to 7 or the embodiments of FIGS. 9 to 15.

Referring to FIGS. 8 to 11, the electronic device 101 may include a housing 201, a first housing 210, a second housing 220, and/or a first hinge assembly 300.

The configuration of the housing 201, the first housing 210, the second housing 220, or the first hinge assembly 300 of FIGS. 8 to 11 may be identical in whole or part to the configuration of the housing 201, the first housing 210, the second housing 220, or the first hinge assembly 300 of FIGS. 4 to 7.

According to an embodiment, the first housing 210 may include a first sub housing portion 211 (e.g., the first sub housing portion 211 of FIGS. 2 to 7), a second sub housing portion 213 (e.g., the second sub housing portion 213 of FIGS. 2 to 7), a fifth sub housing portion 212 (e.g., the fifth sub housing portion 212 of FIGS. 2 to 7), or a first curved surface 215 (e.g., the first curved surface 215 of FIGS. 2 to 7).

According to an embodiment, the second housing 220 may include a third sub housing portion 221 (e.g., the third sub housing portion 221 of FIGS. 2 to 7), a fourth sub housing portion 223 (e.g., the fourth sub housing portion 223 of FIGS. 2 to 7), a sixth sub housing portion 222 (e.g., the sixth sub housing portion 222 of FIGS. 2 to 7), or a second curved surface 225 (e.g., the second curved surface 225 of FIGS. 2 to 7).

According to an embodiment, the first hinge assembly 300 may include a hinge cover 301 (e.g., the hinge cover 301 of FIGS. 4 to 7), a hinge bracket 303, a first hinge structure 310 (e.g., the first hinge structure 310 of FIGS. 4 to 7), or a second hinge structure 320 (e.g., the second hinge structure 320 of FIGS. 4 to 7).

According to an embodiment, the hinge bracket 303 may be coupled to the hinge cover 301. For example, the hinge bracket 303 may be disposed on the hinge cover 301. The hinge bracket 303 may provide a structure rotatable with respect to the first rotation gear 311 of the first hinge structure 310 and/or the second rotation gear 321 of the second hinge structure 320. Further, the hinge bracket 303 may receive and rotatably support at least a portion of the first connecting gear 312 of the first hinge structure 310 and/or at least a portion of the second connecting gear 322 of the second hinge structure 320.

According to an embodiment, a pair of first hinge structures 310 spaced apart from each other may be provided, but the disclosure is not limited thereto. A pair of second hinge structures 320 spaced apart from each other may be provided, but the disclosure is not limited thereto. Hereinafter, one first hinge structure 310 and one second hinge structure 320 are described as an example, but the description thereof may be equally applied and/or applied to the other first hinge structure 310 and the other second hinge structure 320.

According to an embodiment, the first hinge structure 310 may include a first rotation gear 311, a first connecting gear 312, a first pin gear 313 (e.g., the first pin gear 313 of FIGS. 4 to 7), a first guide gear 315 (e.g., the first guide gear 315 of FIGS. 4 to 7), and/or a first link structure 317.

According to an embodiment, the first rotation gear 311 may be coupled to the first sub housing portion 211. Further, the first rotation gear 311 may be disposed on the hinge bracket 303 to be rotatable with respect to the hinge bracket 303. For example, when the first sub housing portion 211 is rotated with respect to the hinge cover 301, the first rotation gear 311 coupled to the first sub housing portion 211 may be rotated on the hinge bracket 303. The hinge bracket 303 may be configured to stably guide rotation of the first rotation gear 311.

According to an embodiment, the first connecting gear 312 may be at least partially accommodated in the hinge bracket 303. The first connecting gear 312 may be fixedly positioned by the hinge bracket 303 and may be configured to rotate on the hinge bracket 303. At least a portion of the first connecting gear 312 may be connected to at least a portion of the first rotation gear 311. Accordingly, when the first rotation gear 311 is rotated, the first connecting gear 312 connected to the first rotation gear 311 may be rotated together. For example, when the first rotation gear 311 is rotated, the first connecting gear 312 dynamically and/or physically connected to the first rotation gear 311 may be rotated.

According to an embodiment, the first connecting gear 312 may be connected to the first pin gear 313. Accordingly, when the first connecting gear 312 is rotated, the first pin gear 313 connected to the first connecting gear 312 may be rotated together. For example, when the first connecting gear 312 is rotated, the first pin gear 313 dynamically and/or physically connected to the first connecting gear 312 may be rotated.

According to an embodiment, the first pin gear 313 may be at least partially disposed on the hinge cover 301. The first pin gear 313 may be coupled to be relatively rotatable with respect to at least a portion of the hinge cover 301. For example, the hinge cover 301 may include a 1-1th coupling portion 3011 and/or a 1-2th coupling portion 3012 configured to limit or prevent separation of the first pin gear 313 and support rotation of the first pin gear 313. Each of the 1-1th coupling portion 3011 and the 1-2th coupling portion 3012 may be disposed on two opposite sides of the first pin gear 313, and may rotatably support the first pin gear 313.

According to an embodiment, the shaft of the first pin gear 313 may be disposed parallel to the shaft of the first connecting gear 312. According to an embodiment (not shown), the first hinge structure 310 may further include a sub connecting gear connecting the first pin gear 313 and the first connecting gear 312. In this case, the shaft of the first pin gear 313 and the shaft of the first connecting gear 312 may be coaxially disposed.

According to an embodiment, the first pin gear 313 may include a first slit 3131 recessed in an outer circumferential surface of the first pin gear 313. The first slit 3131 may extend in a spiral direction from an outer circumferential surface of the first pin gear 313. A first protruding portion 3151 of the first guide gear 315 may be inserted into or received in the first slit 3131. The first slit 3131 may be defined and/or referred to as a first groove or a first recess.

According to an embodiment, the first slit 3131 of the first pin gear 313 may be connected to the first protruding portion 3151 of the first guide gear 315. When the first pin gear 313 is rotated, the first guide gear 315 including the first protruding portion 3151 dynamically and/or physically connected to the first slit 3131 may slide in the vertical direction (e.g., the Y-axis direction of FIGS. 8 to 11) inside the first housing 210. For example, the first guide gear 315 may be configured to move in a linear direction.

According to an embodiment, the first guide gear 315 may be configured to slide in the vertical direction (e.g., the Y-axis direction of FIGS. 8 to 11) inside the first housing 210. The first guide gear 315 may be seated in the first guide recess 2121 formed in the second sub housing portion 213. For example, the first guide gear 315 may be configured to slide in the vertical direction (e.g., the Y-axis direction of FIGS. 8 to 11) on the first guide recess 2121. The first guide recess 2121 may be configured to guide a movement of the first guide gear 315 in a linear direction.

According to an embodiment, the first guide gear 315 may include a first protruding portion (or member, or element) 3151. The first protruding portion 3151 may protrude from at least a portion of the first guide gear 315. The first protruding portion 3151 may be inserted into or received in the first slit 3131, which may also be described as a helical groove, arranged and extending along a shaft portion of the first gear 313. When the first pin gear 313 is rotated as the first protruding portion 3151 is inserted into the spiral first slit 3131, the first protruding portion 3151 at least partially pressed by the first slit 3131 and the first guide gear 315 including the first protruding portion 3151 may slide in the vertical direction inside the first housing 210. For example, when the first pin gear 313 is rotated in one direction, the first guide gear 315 may move upward, and when the first pin gear 313 is rotated in the other direction opposite to the one direction, the first guide gear 315 may move downward.

According to an embodiment, the first guide gear 315 may further include a first guide opening 3152. The first guide opening 3152 may include a hole formed through at least a portion of the first guide gear 315. The first guide opening 3152 may accommodate the first inserted portion 3172 of the first link structure 317. The first guide opening 3152 may extend in the width direction (e.g., the X-axis direction of FIGS. 8 to 11) of the first housing 210. The first inserted portion 3172 may slide in the width direction (e.g., the X-axis direction of FIGS. 8 to 11) of the first housing 210 inside the first guide opening 3152. According to an embodiment, the first guide opening 3152 of the first guide gear 315 may be connected to the first inserted portion 3172 of the first link structure 317. When the first guide gear 315 slides in the vertical direction (e.g., the Y-axis direction of FIGS. 8 to 11) inside the first housing 210, the first inserted portion 3172 dynamically and/or physically connected to the first guide gear 315 may slide in the width direction (e.g., the X-axis direction of FIGS. 8 to 11) of the first housing 210 inside the first guide opening 3152.

According to an embodiment, the first link structure 317 may include a plurality of links. The first link structure may comprise, for example, an arrangement of four linked (or hingedly coupled) arms, arranged in a diamond (or quadrilateral, rhombus, or parallelogram) shape as shown in FIG. 8. The arrangement converts vertical (Y direction) displacement of the bottom hinge or link in the figure into horizontal, or lateral (X axis) displacement of the left-most hinge or link. It will be appreciated that other linkage mechanisms may be employed in alternative embodiments, such as scissor mechanisms.

The first link structure 317 may include a 1-1th fixing portion 3171 and a 1-2th fixing portion 3173. The 1-1th fixing portion 3171 may fix or couple one area (or one point) of the plurality of links to at least a portion of the first sub housing portion 211. The 1-2th fixing portion 3173 may fix or couple the other area (or the other point) of the plurality of links to at least a portion of the second sub housing portion 213. The first link structure 317 may further include a first inserted portion 3172. The first inserted portion 3172 may be configured to slide in the width direction (e.g., the X-axis direction of FIGS. 8 to 11) of the first housing 210 in the first guide opening 3152 of the first guide gear 315.

According to an embodiment, as the first guide gear 315 slides in the vertical direction (e.g., the Y-axis direction of FIGS. 8 to 11) inside the first housing 210, the first inserted portion 3172 dynamically and/or physically connected to the first guide opening 3152 of the first guide gear 315 may be pressed by the first guide opening 3152. The first inserted portion 3172 may slide in the vertical direction (e.g., the Y-axis direction of FIGS. 8 to 11) inside the first housing 210 together with the first guide gear 315. Further, the first inserted portion 3172 may slide in the width direction (e.g., the X-axis direction of FIGS. 8 to 11) of the first housing 210 inside the first guide opening 3152. Further, as the first inserted portion 3172 slides or the position of the first inserted portion 3172 changes, the plurality of links of the first link structure 317 may be unfolded so that the 1-2th fixing portion 3173 moves in the direction away from the 1-1th fixing portion 3171, or may be folded so that the 1-2th fixing portion 3173 moves in the direction close to the 1-1th fixing portion 3171. For example, when the 1-2th fixing portion 3173 moves in the direction away from the 1-1th fixing portion 3171, the 1-2th fixing portion 3173 may press the second sub housing portion 213 so that the second sub housing portion 213 coupled to the 1-2th fixing portion 3173 moves in the direction away from the first sub housing portion 211. When the 1-2th fixing portion 3173 moves in the direction close to the 1-1th fixing portion 3171, the 1-2th fixing portion 3173 may pull the second sub housing portion 213 so that the second sub housing portion 213 coupled to the 1-2th fixing portion 3173 moves in the direction close to the first sub housing portion 211. For example, the second sub housing portion 213 dynamically and/or physically connected to the 1-2th fixing portion 3173 of the first link structure 317 may move in the direction away from the first sub housing portion 211 or may move in the direction close to the first sub housing portion 211, based on a force provided from the first link structure 317.

According to an embodiment, the second hinge structure 320 may include a second rotation gear 321, a second connecting gear 322, a second pin gear 323 (e.g., the second pin gear 323 of FIGS. 4 to 7), a second guide gear 325 (e.g., the second guide gear 325 of FIGS. 4 to 7), or a second link structure 327.

According to an embodiment, the second rotation gear 321 may be coupled to the third sub housing portion 221. Further, the second rotation gear 321 may be disposed on the hinge bracket 303 to be rotatable with respect to the hinge bracket 303. For example, when the third sub housing portion 221 is rotated with respect to the hinge cover 301, the second rotation gear 321 coupled to the third sub housing portion 221 may be rotated on the hinge bracket 303. The hinge bracket 303 may be configured to stably guide rotation of the second rotation gear 321.

According to an embodiment, the second connecting gear 322 may be at least partially accommodated in the hinge bracket 303. The second connecting gear 322 may be fixedly positioned by the hinge bracket 303 and may be configured to rotate on the hinge bracket 303. At least a portion of the second connecting gear 322 may be connected to at least a portion of the second rotation gear 321. Accordingly, when the second rotation gear 321 is rotated, the second connecting gear 322 connected to the second rotation gear 321 may be rotated together. For example, when the second rotation gear 321 is rotated, the second connecting gear 322 dynamically and/or physically connected to the second rotation gear 321 may be rotated.

According to an embodiment, the second connecting gear 322 may be connected to the second pin gear 323. Accordingly, when the second connecting gear 322 is rotated, the second pin gear 323 connected to the second connecting gear 322 may be rotated together. For example, when the second connecting gear 322 is rotated, the second pin gear 323 dynamically and/or physically connected to the second connecting gear 322 may be rotated.

According to an embodiment, the second pin gear 323 may be at least partially disposed on the hinge cover 301. The second pin gear 323 may be coupled to be relatively rotatable with respect to at least a portion of the hinge cover 301. For example, the hinge cover 301 may include a 2-1th coupling portion 3021 and/or a 2-2th coupling portion 3022 configured to limit or prevent separation of the second pin gear 323 and support rotation of the second pin gear 323. The 2-1th coupling portion 3021 and the 2-2th coupling portion 3022 may be disposed on two opposite sides, respectively, of the second pin gear 323, and may rotatably support the second pin gear 323.

According to an embodiment, the shaft of the second pin gear 323 may be disposed parallel to the shaft of the second connecting gear 322. According to an embodiment (not shown), the second hinge structure 320 may further include a sub connecting gear connecting the second pin gear 323 and the second connecting gear 322. In this case, the shaft of the second pin gear 323 and the shaft of the second connecting gear 322 may be coaxially disposed.

According to an embodiment, the second pin gear 323 may include a second slit 3241 recessed in the outer circumferential surface of the second pin gear 323. The second slit 3241 may extend in a spiral direction from an outer circumferential surface of the second pin gear 323. The second protruding portion 3251 of the second guide gear 325 may be inserted into or received in the second slit 3241. The second slit 3241 may be defined and/or referred to as a second groove or a second recess.

According to an embodiment, the second slit 3241 of the second pin gear 323 may be connected to the second protruding portion 3251 of the second guide gear 325. When the second pin gear 323 is rotated, the second guide gear 325 including the second protruding portion 3251 dynamically and/or physically connected to the second slit 3241 may slide in the vertical direction (e.g., the Y-axis direction of FIGS. 8 to 11) inside the second housing 220. For example, the second guide gear 325 may be configured to move in a linear direction.

According to an embodiment, the second guide gear 325 may be configured to slide in the vertical direction (e.g., the Y-axis direction of FIGS. 8 to 11) inside the second housing 220. The second guide gear 325 may be seated in the second guide recess 2221 formed in the fourth sub housing portion 223. For example, the second guide gear 325 may be configured to slide in the vertical direction (e.g., the Y-axis direction of FIGS. 8 to 11) on the second guide recess 2221. The second guide recess 2221 may be configured to guide a movement of the second guide gear 325 in a linear direction.

According to an embodiment, the second guide gear 325 may include a second protruding portion 3251. The second protruding portion 3251 may protrude from at least a portion of the second guide gear 325. The second protruding portion 3251 may be inserted into or received in the second slit 3241. When the second pin gear 323 is rotated as the second protruding portion 3251 is inserted into the spiral second slit 3241, the second protruding portion 3251 at least partially pressed by the second slit 3241 and the second guide gear 325 including the second protruding portion 3251 may slide in the vertical direction inside the second housing 220. For example, when the second pin gear 323 is rotated in one direction, the second guide gear 325 may move upward, and when the second pin gear 323 is rotated in the other direction opposite to the one direction, the second guide gear 325 may move downward.

According to an embodiment, the second guide gear 325 may further include a second guide opening 3252. The second guide opening 3252 may include a hole formed through at least a portion of the second guide gear 325. The second guide opening 3252 may accommodate the second inserted portion 3272 of the second link structure 327. The second guide opening 3252 may extend in the width direction (e.g., the X-axis direction of FIGS. 8 to 11) of the second housing 220. The second inserted portion 3272 may slide in the width direction (e.g., the X-axis direction of FIGS. 8 to 11) of the second housing 220 inside the second guide opening 3252. According to an embodiment, the second guide opening 3252 of the second guide gear 325 may be connected to the second inserted portion 3272 of the second link structure 327. When the second guide gear 325 slides in the vertical direction (e.g., the Y-axis direction of FIGS. 8 to 11) inside the second housing 220, the second inserted portion 3272 dynamically and/or physically connected to the second guide gear 325 may slide in the width direction (e.g., the X-axis direction of FIGS. 8 to 11) of the second housing 220 inside the second guide opening 3252.

According to an embodiment, the second link structure 327 may include a plurality of links. The second link structure 327 may include a 2-1th fixing portion 3271 and a 2-2th fixing portion 3273. The 2-1th fixing portion 3271 may fix or couple one area (or one point) of the plurality of links to at least a portion of the third sub housing portion 221. The 2-2th fixing portion 3273 may fix or couple the other area (or the other point) of the plurality of links to at least a portion of the fourth sub housing portion 223. The second link structure 327 may further include a second inserted portion 3272. The second inserted portion 3272 may be configured to slide in the width direction (e.g., the X-axis direction of FIGS. 8 to 11) of the second housing 220 in the second guide opening 3252 of the second guide gear 325.

According to an embodiment, as the second guide gear 325 slides in the vertical direction (e.g., the Y-axis direction of FIGS. 8 to 11) inside the second housing 220, the second inserted portion 3272 dynamically and/or physically connected to the second guide opening 3252 of the second guide gear 325 may be pressed by the second guide opening 3252. The second inserted portion 3272 may slide in the vertical direction (e.g., the Y-axis direction of FIGS. 8 to 11) inside the second housing 220 together with the second guide gear 325. Further, the second inserted portion 3272 may slide in the width direction (e.g., the X-axis direction of FIGS. 8 to 11) of the second housing 220 inside the second guide opening 3252. Further, as the second inserted portion 3272 slides or the position of the second inserted portion 3272 changes, the plurality of links of the second link structure 327 may be unfolded so that the 2-2th fixing portion 3273 moves in the direction away from the 2-1th fixing portion 3271, or may be folded so that the 2-2th fixing portion 3273 moves in the direction close to the 2-1th fixing portion 3271. For example, when the 2-2th fixing portion 3273 moves in the direction away from the 2-1th fixing portion 3271, the 2-2th fixing portion 3273 may press the fourth sub housing portion 223 so that the fourth sub housing portion 223 coupled to the 2-2th fixing portion 3273 moves in the direction away from the third sub housing portion 221. When the 2-2th fixing portion 3273 moves in the direction close to the 2-1th fixing portion 3271, the 2-2th fixing portion 3273 may pull the fourth sub housing portion 223 so that the fourth sub housing portion 223 coupled to the 2-2th fixing portion 3273 moves in the direction close to the third sub housing portion 221. For example, the fourth sub housing portion 223 dynamically and/or physically connected to the 2-2th fixing portion 3273 of the second link structure 327 may move in the direction away from the third sub housing portion 221 or may move in the direction close to the third sub housing portion 221 based on a force provided from the second link structure 327.

According to an embodiment, the second sub housing portion 213 may include a first guide recess 2121 configured to guide the movement of the first guide gear 315. The first guide recess 2121 may be recessed in the second sub housing portion 213. The first guide gear 315 may be seated in the first guide recess 2121, and may slide on the first guide recess 2121. The second sub housing portion 213 may include a first rail portion 2122 configured to guide the movement of the 1-2th fixing portion 3173. The first rail portion 2122 may be recessed in the second sub housing portion 213. The 1-2th fixing portion 3173 may be at least partially accommodated in the first rail portion 2122, and may slide on the first rail portion 2122.

According to an embodiment, the fourth sub housing portion 223 may include a second guide recess 2221 configured to guide the movement of the second guide gear 325. The second guide recess 2221 may be recessed in the fourth sub housing portion 223. The second guide gear 325 may be seated in the second guide recess 2221 and may slide on the second guide recess 2221. The fourth sub housing portion 223 may include a second rail portion 2222 configured to guide the movement of the 2-2th fixing portion 3273. The second rail portion 2222 may be recessed in the fourth sub housing portion 223. The 2-2th fixing portion 3273 may be at least partially accommodated in the second rail portion 2222, and may slide on the second rail portion 2222.

Hereinafter, the arrangement or operation of the components of the first hinge structure 310 when the state of the electronic device 101 is changed from the folded state to the unfolded state is described with reference to FIGS. 10 to 11. The first hinge structure 310 illustrated in FIGS. 8 to 9 may be the first hinge structure 310 disposed on the side in the -Y direction of FIG. 6, and the first hinge structure 310 illustrated in FIGS. 10 to 11 may be the first hinge structure 310 disposed on the side in the +Y direction of FIG. 6. The description of the first hinge structure 310 made with reference to FIGS. 10 to 11 may be equally applied and/or understood for the first hinge structure 310 disposed in the -Y direction of FIG. 6. The description of the second hinge structure 320 made with reference to FIGS. 10 to 11 may be equally applied and/or understood for the second hinge structure 320.

FIG. 10 illustrates an arrangement of the components of the first hinge structure 310 in a state in which the electronic device 101 is folded. FIG. 11 illustrates an arrangement of the components of the first hinge structure 310 in the unfolded state of the electronic device 101.

According to an embodiment, when the state of the electronic device 101 is changed from the folded state to the unfolded state, the first rotation gear 311 may be rotated on the hinge bracket 303 together with the first sub housing portion 211. When the first rotation gear 311 is rotated, the first connecting gear 312 connected to the first rotation gear 311 may be rotated. When the first connecting gear 312 is rotated, the first pin gear 313 connected to the first connecting gear 312 may be rotated. When the first pin gear 313 is rotated, the first guide gear 315 connected to the first pin gear 313 may slide in the direction away from the first rotation gear 311 (e.g., the +Y direction of FIGS. 10 to 11). When the first guide gear 315 slides, the first inserted portion 3172 connected to the first guide gear 315 may be pressed by the first guide opening 3152. The first inserted portion 3172 may slide in the direction (e.g., the +Y direction of FIGS. 10 to 11) away from the first rotation gear 311 together with the first guide gear 315 by the first guide opening 3152. Accordingly, the first inserted portion 3172 may slide in the direction away from the first pin gear 313 (e.g., the -X direction of FIGS. 10 to 11) on the first guide opening 3152. As the position of the first inserted portion 3172 changes, the plurality of links of the first link structure 317 may be unfolded so that the 1-2th fixing portion 3173 moves in the direction away from the 1-1th fixing portion 3171 (e.g., the -X direction of FIGS. 10 to 11). As the 1-2th fixing portion 3173 moves in the direction away from the 1-1th fixing portion 3171 fixed to the first sub housing portion 211 (e.g., the -X direction of FIGS. 10 to 11), the second sub housing portion 213 coupled to the 1-2th fixing portion 3173 may move in the direction away from the first sub housing portion 211 (e.g., the -X direction of FIGS. 10 to 11). As the second sub housing portion 213 moves in the direction away from the first sub housing portion 211, the first sub housing portion 211 and the second sub housing portion 213 may be spaced apart from each other by a designated distance (e.g., the distance L of FIG. 11). Accordingly, when the state of the electronic device 101 is changed from the folded state to the unfolded state, the first housing 210 may be extended as the second sub housing portion 213 moves in the direction away from the first sub housing portion 211 (e.g., the -X direction of FIGS. 10 to 11). Further, at least a portion of the first extended area 246 (e.g., the first extended area 246 of FIGS. 2 and 3) accommodated inside the second sub housing portion 213 is exposed to the outside of the second sub housing portion 213, so that the surface of the flexible display 240 (e.g., the flexible display 240 of FIGS. 2 and 3) may be extended.

Hereinafter, the arrangement or operation of the components of the first hinge structure 310 when the state of the electronic device 101 is changed from the unfolded state to the folded state is described with reference to FIGS. 10 to 11. The first hinge structure 310 illustrated in FIGS. 8 to 9 may be the first hinge structure 310 disposed on the side in the -Y direction of FIG. 6, and the first hinge structure 310 illustrated in FIGS. 10 to 11 may be the first hinge structure 310 disposed on the side in the +Y direction of FIG. 6. The description of the first hinge structure 310 made with reference to FIGS. 10 to 11 may be equally applied and/or understood for the first hinge structure 310 disposed in the -Y direction of FIG. 6. The description of the second hinge structure 320 made with reference to FIGS. 10 to 11 may be equally applied and/or understood for the second hinge structure 320.

FIG. 10 illustrates an arrangement of the components of the first hinge structure 310 in the unfolded state of the electronic device 101. FIG. 11 illustrates an arrangement of the components of the first hinge structure 310 in a state in which the electronic device 101 is folded.

According to an embodiment, when the state of the electronic device 101 is changed from the unfolded state to the folded state, the first rotation gear 311 may be rotated on the hinge bracket 303 together with the first sub housing portion 211. The rotating direction of the first rotation gear 311 when the state of the electronic device 101 is changed into the folded state may be opposite to the rotating direction of the first rotation gear 311 when the state of the electronic device 101 is changed into the unfolded state. When the first rotation gear 311 is rotated, the first connecting gear 312 connected to the first rotation gear 311 may be rotated. When the first connecting gear 312 is rotated, the first pin gear 313 connected to the first connecting gear 312 may be rotated. When the first pin gear 313 is rotated, the first guide gear 315 connected to the first pin gear 313 may slide in the direction (e.g., the -Y direction of FIGS. 10 to 11) close to the first rotation gear 311. When the first guide gear 315 slides, the first inserted portion 3172 connected to the first guide gear 315 may be pressed by the first guide opening 3152. The first inserted portion 3172 may slide together with the first guide gear 315 in the direction (e.g., the - Y direction of FIGS. 10 to 11) close to the first rotation gear 311 by the first guide opening 3152. Accordingly, the first inserted portion 3172 may slide on the first guide opening 3152 in the direction (e.g., the +X direction of FIGS. 10 to 11) close to the first pin gear 313. As the position of the first inserted portion 3172 changes, the plurality of links of the first link structure 317 may be folded so that the 1-2th fixing portion 3173 moves in the direction close to the 1-1th fixing portion 3171 (e.g., the +X direction of FIGS. 10 to 11). As the 1-2th fixing portion 3173 moves in the direction close to the 1-1th fixing portion 3171 fixed to the first sub housing portion 211 (e.g., the +X direction of FIGS. 10 to 11), the second sub housing portion 213 coupled to the 1-2th fixing portion 3173 may move in the direction close to the first sub housing portion 211 (e.g., the +X direction of FIGS. 10 to 11). As the second sub housing portion 213 approaches the first sub housing portion 211, the second sub housing portion 213 may contact the first sub housing portion 211. Accordingly, when the state of the electronic device 101 is changed from the unfolded state to the folded state, the first housing 210 may be shrunken as the second sub housing portion 213 moves in the direction (e.g., the +X direction of FIGS. 10 to 11) close to the first sub housing portion 211. Further, at least a portion of the first extended area 246 (e.g., the first extended area 246 of FIGS. 2 and 3) exposed to the outside of the second sub housing portion 213 may be accommodated inside the second sub housing portion 213, thereby shrinking the surface of the flexible display 240 (e.g., the flexible display 240 of FIGS. 2 and 3).

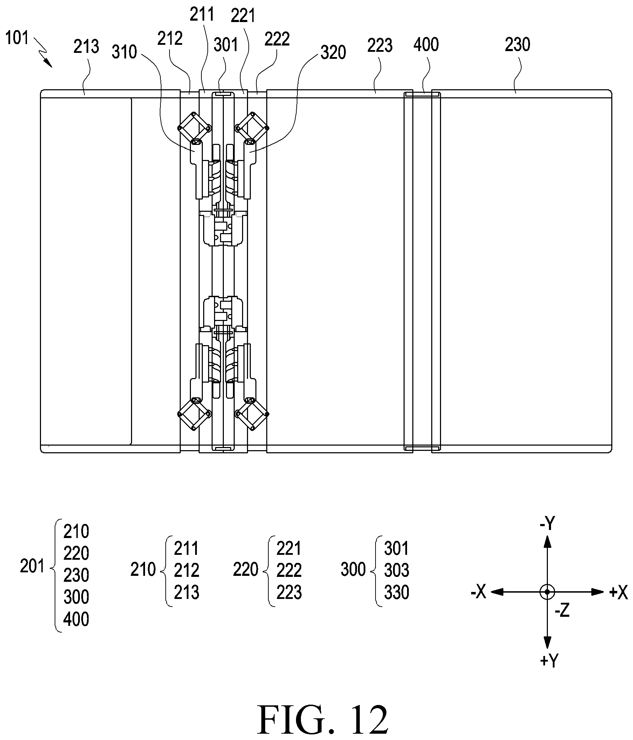

FIG. 12 is a plan view illustrating an unfolded state of an electronic device according to an embodiment of the disclosure.

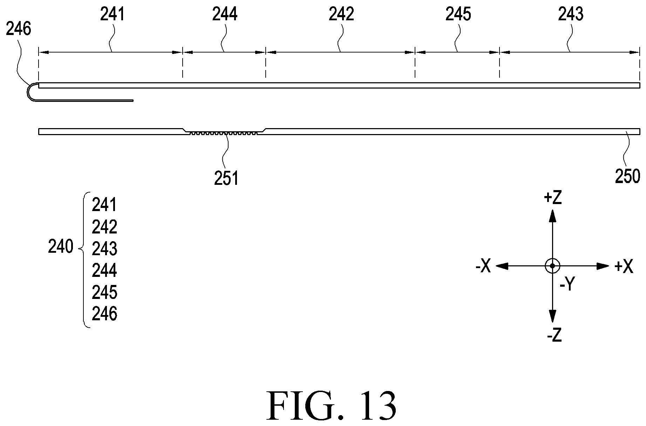

FIG. 13 is a side view illustrating a flexible display and a display support member according to an embodiment of the disclosure.

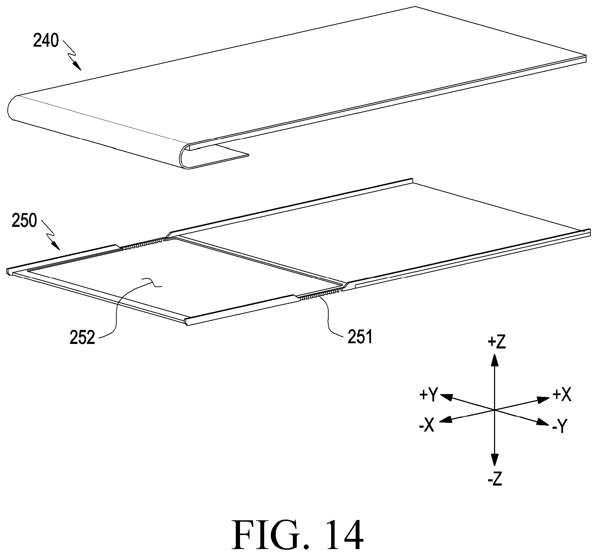

FIG. 14 is an exploded perspective view illustrating a flexible display and a display support member according to an embodiment of the disclosure.

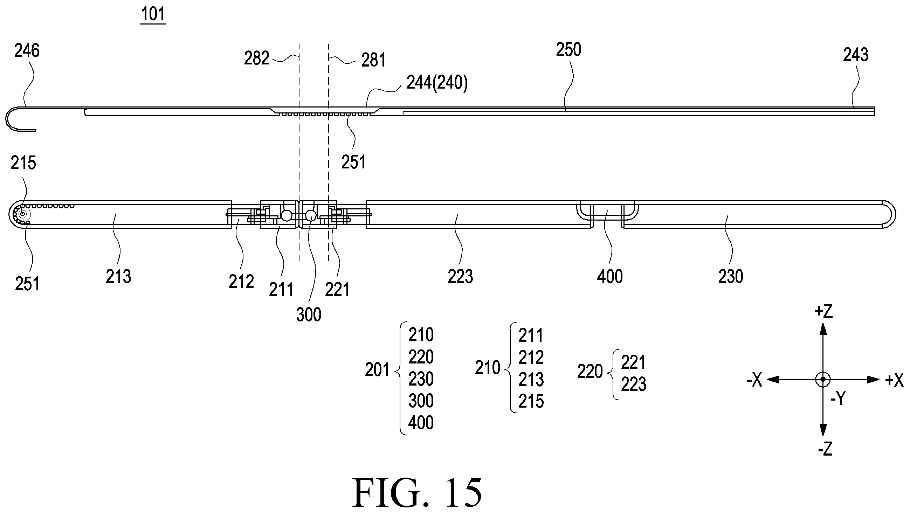

FIG. 15 is a side view illustrating an electronic device and a flexible display according to an embodiment.

The embodiments of FIGS. 12 to 15 may be combined with the embodiments of FIGS. 1 to 11.

Referring to FIGS. 12 to 15, an electronic device 101 (e.g., the electronic device 101 of FIG. 1 or the electronic device 101 of FIGS. 2 to 11) may include a housing 201, a flexible display 240, or a display support member 250.

The configuration of the housing 201 of FIGS. 12 to 15 may be identical in whole or part to the configuration of the housing 201 of FIGS. 1 to 10. The configuration of the flexible display 240 of FIGS. 12 to 15 may be identical in whole or part to the configuration of the flexible display 240 of FIGS. 2 and 3.

According to an embodiment (e.g., see FIGS. 12, or 15), the housing 201 may include a first housing 210 (e.g., the first housing 210 of FIGS. 2 to 11), a second housing 220 (e.g., the second housing 220 of FIGS. 2 to 11), a third housing 230, a first hinge assembly 300 (e.g., the first hinge assembly 300 of FIGS. 2 to 11), or a second hinge assembly 400.

According to an embodiment, the first housing 210 may include a first sub housing portion 211 (e.g., the first sub housing portion 211 of FIGS. 2 to 11), a second sub housing portion 213 (e.g., the second sub housing portion 213 of FIGS. 2 to 11), a fifth sub housing portion 212 (e.g., the fifth sub housing portion 212 of FIGS. 2 to 11), or a first curved surface 215 (e.g., the first curved surface 215 of FIGS. 2 to 7).

According to an embodiment, the second housing 220 may include a third sub housing portion 221 (e.g., the third sub housing portion 221 of FIGS. 2 to 11), a fourth sub housing portion 223 (e.g., the fourth sub housing portion 223 of FIGS. 2 to 11), or a sixth sub housing portion 222 (e.g., the sixth sub housing portion 222 of FIGS. 2 to 11).

According to an embodiment, the first hinge assembly 300 may include a hinge cover 301 (e.g., the hinge cover 301 of FIGS. 4 to 11), a hinge bracket 303 (e.g., the hinge bracket 303 of FIGS. 8 to 11), a first hinge structure 310 (e.g., the first hinge structure 310 of FIGS. 4 to 11), or a second hinge structure 320 (e.g., the second hinge structure 320 of FIGS. 4 to 11).

According to an embodiment, the second hinge assembly 400 may be connected to the second housing 220 (e.g., the fourth sub housing portion 223) and the third housing 230. For example, at least a portion of the second hinge assembly 400 may be connected to the second housing 220 and the third housing 230. For example, the second hinge assembly 400 may rotatably connect the second housing 220 and the third housing 230 with respect to each other. For example, the second housing 220 may rotate about the second hinge assembly 400 with respect to the third housing 230, and the third housing 230 may rotate about the second hinge assembly 400 with respect to the second housing 220. For example, the second housing 220 and the third housing 230 may be disposed in a folded state with respect to each other or may be disposed in an unfolded state with respect to each other. In the state in which the second housing 220 and the third housing 230 are folded, the front surface (e.g., the second front surface) of the second housing 220 and the front surface (e.g., the third front surface) of the third housing 230 may face in opposite directions to each other. For example, in a state in which the second housing 220 and the third housing 230 are folded, the rear surface of the second housing 220 may face the rear surface of the third housing 230. In a state in which the second housing 220 and the third housing 230 are unfolded, the second front surface of the second housing 220 and the third front surface of the third housing 230 may face in substantially the same direction and may form a substantially flat surface.

Referring to FIG. 13, the flexible display 240 may include a first display area 241 (e.g., the first display area 241 of FIGS. 2 and 3) disposed on the first housing 210, a second display area 242 (e.g., the second display area 242 of FIGS. 2 and 3) disposed on the second housing 220, a third display area 243 disposed on the third housing 230, a first folding area 244 (e.g., the first folding area 244 of FIGS. 2 and 3) connecting the first display area 241 and the second display area 242, a second folding area 245 connecting the second display area 242 and the third display area 243, or a first extended area 246 (e.g., the first extended area 246 of FIGS. 2 and 3) extending from the first display area 241.

According to an embodiment, the second folding area 245 may be disposed on the second hinge assembly 400. The second folding area 245 may be at least partially folded or unfolded. For example, when the second housing 220 and the third housing 230 are folded, the second folding area 245 may form a curved surface. When the second housing 220 and the third housing 230 are unfolded, the surface of the second folding area 245 may form a substantially flat surface with the surface of the second display area 242 and the surface of the third display area 243. When the second housing 220 and the third housing 230 are folded, at least a portion of the second folding area 245 positioned on the second hinge assembly 400 may be visually exposed to the outside of the electronic device 101 and/or the housing 201. For example, when the second housing 220 and the third housing 230 are folded, the second hinge assembly 400 may be at least partially covered or sealed by the second folding area 245.

According to an embodiment, the third display area 243 may be fixed to the third housing 230.

According to an embodiment, the display support member 250 may be disposed between the housing 201 and the flexible display 240. The display support member 250 may be defined and/or referred to as a display bracket.

According to an embodiment, the display support member 250 may be configured to support the flexible display 240.

According to an embodiment, the display support member 250 may include a lattice pattern 251. The lattice pattern 251 may be formed in at least a portion of the display support member 250. The lattice pattern 251 may have a position corresponding to the first folding area 244. The lattice pattern 251 may include at least one slit or at least one opening formed in at least a portion of the display support member 250. The lattice pattern 251 may provide flexibility to at least a portion of the display support member 250 corresponding to the first folding area 244.

According to an embodiment, the display support member 250 may further include an opening (e.g., the opening 252 of FIG. 14). The opening 252 may be formed in a portion of the first extended area 246, the first display area 241, or at least a portion of the display support member 250 having a position corresponding to the first folding area 244. The opening 252 may be a hole formed through the display support member 250.

Referring to FIG. 15, the electronic device 101 may further include a first supporting structure 251 (e.g., the first supporting structure 251 of FIG. 5 or FIG. 7) disposed in the second sub housing portion 213.

According to an embodiment, when the state of the electronic device 101 is changed from the folded state to the unfolded state, the second sub housing portion 213 may slide in the direction away from the first sub housing portion 211, and the fourth sub housing portion 223 may slide in the direction away from the third sub housing portion 221. **In** this case, as the second sub housing portion 213 moves in the direction away from the first sub housing portion 211, at least a portion of the first extended area 246 accommodated in the second sub housing portion 213 may be exposed to the outside of the second sub housing portion 213. As the third display area 243 is fixed to the third housing 230, the first hinge assembly 300 may move relative to the first folding area 244 by the extension of the first housing 210 and the extension of the third housing 230. For example, although not illustrated, when the state of the electronic device 101 is a changed state, the center of the first folding area 244 may be positioned substantially corresponding to the center of the first hinge assembly 300. When the electronic device 101 is in the unfolded state, the first hinge assembly 300 may slide relatively in the direction (e.g., the -X direction of FIG. 15) away from the first folding area 244 by the extension of the first housing 210 and the extension of the third housing 230. Accordingly, when the electronic device 101 is in the unfolded state, the center 281 of the first folding area 244 may be spaced apart from the center 282 of the first hinge assembly 300 in the width direction (e.g., the X-axis direction of FIG. 15) of the electronic device 101.

According to an embodiment (not illustrated), the first link structure 317 (e.g., the first link structure 317 of FIGS. 4 to 11) of the first hinge structure 310 and/or the second link structure 327 (e.g., the second link structure 327 of FIGS. 4 to 11) of the second hinge structure 320 may be replaced with a driving structure including a rack and a motor including a pinion. For example, when the state of the electronic device 101 is changed from the folded state to the unfolded state or is changed from the unfolded state to the folded state, the motor may operate according to the folding angle between the first housing 210 and the second housing 220 to provide a driving force for a sliding movement of the second sub housing portion 213 with respect to the first sub housing portion 211 or a sliding movement of the fourth sub housing portion 223 with respect to the third sub housing portion 221. For example, the processor (e.g., the processor 120 of FIG. 1) of the electronic device 101 may be configured to receive information about the folding angle of the first housing 210 and the second housing 220, and to control the motor to provide a driving force for extending and/or shrinking the first housing 210 and/or the second housing 220 based on the information about the folding angle.

An electronic device (e.g., a portable terminal) includes a display with a flat surface or both a flat and curved surface. An electronic device with an existing type of display may need another terminal to implement a larger size than that of the electronic device due to the fixed display structure. Accordingly, research has been conducted on electronic devices including a foldable or rollable display.

According to an embodiment of the disclosure, there may be provided a flexible display configured to extend or shrink a first housing and/or a second housing and an electronic device including the same.

According to an embodiment of the disclosure, there may be provided a flexible display in which at least a portion of a housing may be extended as an electronic device is unfolded, and an electronic device including the same.

The disclosure is not limited to the foregoing embodiments but various modifications or changes may rather be made thereto without departing from the scope of the disclosure.

According to an embodiment of the disclosure, there may be provided a flexible display capable of providing a structure in which at least a portion of a housing is extendable when the housing changes from a folded state to an unfolded state and an electronic device including the same.

According to an embodiment of the disclosure, there may be provided a flexible display in which the display exposed to the outside of an electronic device is extendable as at least a portion of a housing is extendable and an electronic device including the same.

Effects obtainable from the disclosure are not limited to the above-mentioned effects, and other effects not mentioned may be clearly understood by those skilled in the art from the following description.

According to an embodiment of the disclosure, an electronic device 101 may comprise a first housing 210, a second housing 220, a first hinge assembly 300, or a flexible display 240. The first housing 210 may include a first sub housing portion 211 or a second sub housing portion 213. The second sub housing portion 213 may be configured to move with respect to the first sub housing portion 211. At least part of the first hinge assembly 300 may be connected to the first housing 210 and the second housing 220. The flexible display 240 may be disposed on the first housing 210 and the second housing 220. The first hinge assembly 300 may include a hinge cover 301, a first pin gear 313, or a first link structure 317.According to an embodiment, the first hinge assembly 300 may include a hinge cover 301, a first hinge structure 313, or a second hinge structure 317. The first pin gear 313 may be rotatably coupled to the hinge cover 301. The first link structure 317 may be dynamically connected to the first pin gear 313. The first link structure 317 may be configured to provide a force for moving the second sub housing portion 213 in the direction away from or close to the first sub housing portion 211 based on the rotation of the first pin gear 313.

According to an embodiment, the first hinge assembly 300 may further include a hinge bracket 303, a first rotation gear 311, a first connecting gear 312, or a first guide gear 315. The hinge bracket 303 may be disposed on the hinge cover 301. The first rotation gear 311 may be rotatably coupled to the hinge bracket 303. The first rotation gear 311 may be coupled to the first sub housing portion 211. The first connecting gear 312 may be connected to the first rotation gear 311 and the first pin gear 313. The first guide gear 315 may be connected to the first pin gear 313 and the first link structure 317.

According to an embodiment, the first pin gear 313 may include a first slit 3131. The first slit 3131 may be formed to be recessed in an outer circumferential surface of the first pin gear 313. The first guide gear 315 may include a first protruding portion 3151. The first protruding portion 3151 may protrude from at least a portion of the first guide gear 315. The first protruding portion 3151 may be inserted into the first slit 3131.

According to an embodiment, the first slit 3131 may extend in a spiral direction. When the first pin gear 313 is rotated, the first guide gear 315 may be configured to move in a linear direction.

According to an embodiment, the first guide gear 315 may further include a first guide opening 3152. The first guide opening 3152 may be formed through another portion of the first guide gear 315. The first link structure 317 may include a first inserted portion 3172. The first inserted portion 3172 may be disposed in the first guide opening 3152.

According to an embodiment, the first link structure 317 may include a 1-1th fixing portion 3171 or a 1-2th fixing portion 3173. The 1-1th fixing portion 3171 may be coupled to the first sub housing portion 211. The 1-2th fixing portion 3173 may be coupled to the second sub housing portion 213.

According to an embodiment, the second housing 220 may include a third sub housing portion 221 or a fourth sub housing portion 223. The fourth sub housing portion 223 may be configured to move with respect to the third sub housing portion 221.

According to an embodiment, the first hinge assembly 300 may further include a second pin gear 323 or a second link structure 327. The second pin gear 323 may be rotatably coupled to the hinge cover 301. The second link structure 327 may be dynamically connected to the second pin gear 323. The second link structure 327 may be configured to provide a force for moving the fourth sub housing portion 223 in a direction away from or closer to the third sub housing portion 221 based on the rotation of the second pin gear 323.

According to an embodiment, the first hinge assembly 300 may further include a second rotation gear 321, a second connecting gear 322, or a second guide gear 325. The second rotation gear 321 may be rotatably coupled to the hinge bracket 303. The second rotation gear 321 may be coupled to the third sub housing portion 221. The second connecting gear 322 may be connected to the second rotation gear 321 and the second pin gear 323. The second guide gear 325 may be connected to the second pin gear 323 and the second link structure 327.

According to an embodiment, the flexible display 240 may include a first folding area 244, a first display area 241, or a second display area 242. The first folding area 244 may be disposed on the first hinge assembly 300. The first display area 241 may be connected to the first folding area 244. The first display area 241 may be disposed on the first housing 210. The second display area 242 may be connected to the first folding area 244. The second display area 242 may be disposed on the second housing 220.

According to an embodiment, the flexible display 240 may further include a first extended area 246. The first extended area 246 may extend from the first display area 241. When the second sub housing portion 213 moves in the direction away from the first sub housing portion 211, at least a portion of the first extended area 246 may be configured to move from the inside of the second sub housing portion 213 to the outside of the second sub housing portion 213.

According to an embodiment, the flexible display 240 may further include a second extended area 247. The second extended area 247 may extend from the second display area 242. When the fourth sub housing portion 223 moves in the direction away from the third sub housing portion 221, at least a portion of the second extended area 247 may be configured to move from the inside of the fourth sub housing portion 223 to the outside of the third sub housing portion 223.

According to an embodiment, the electronic device may further include a third housing 230 or a second hinge assembly 400. At least a portion of the second hinge assembly 400 may be connected to the second housing 220 and the third housing 230.

According to an embodiment, the flexible display 240 may further include a third display area 243 or a second folding area 245. The third display area 243 may be disposed on the third housing 230. The second folding area 245 may be disposed on the second hinge assembly 400. The second folding area 245 may be connected to the second display area 242 and the third display area 243.

According to an embodiment, the electronic device may further include a display support member 250. The display support member 250 may be configured to support the flexible display 240.

According to an embodiment of the disclosure, an electronic device 101 may comprise a first housing 210, a second housing 220, a first hinge assembly 300, or a flexible display 240. The first housing 210 may include a first sub housing portion 211 or a second sub housing portion 213. The second sub housing portion 213 may be configured to move with respect to the first sub housing portion 211. The second housing 220 may include a third sub housing portion 221 or a fourth sub housing portion 223. The fourth sub housing portion 223 may be configured to move with respect to the third sub housing portion 221. The first hinge assembly 300 may be connected to the first housing 210 and the second housing 220. The flexible display 240 may be disposed on the first housing 210 and the second housing 220. The first hinge assembly 300 may include a hinge cover 301, a hinge bracket 303, a first hinge structure 310, or a second hinge structure 320. The hinge bracket 303 may be disposed on the hinge cover 301. The first hinge structure 310 may be at least partially disposed on the hinge cover 301. The first hinge structure 310 may be connected to the first housing 210. The second hinge structure 320 may be at least partially disposed on the hinge cover 301. The second hinge structure 320 may be connected to the second housing 220.

According to an embodiment, the first hinge structure 310 may include a first pin gear 313 or a first link structure 317. The first pin gear 313 may be rotatably coupled to the hinge cover 301. The first link structure 317 may be dynamically connected to the first pin gear 313. The first link structure 317 may be configured to provide a force for moving the second sub housing portion 213 in the direction away from or close to the first sub housing portion 211 based on the rotation of the first pin gear 313.

According to an embodiment, the first hinge structure 310 may further include a first rotation gear 311, a first connecting gear 312, or a first guide gear 315. The first rotation gear 311 may be rotatably coupled to the hinge bracket 303. The first rotation gear 311 may be coupled to the first sub housing portion 211. The first connecting gear 312 may be connected to the first rotation gear 311 and the first pin gear 313. The first guide gear 315 may be connected to the first pin gear 313 and the first link structure 317.

According to an embodiment, the second hinge structure 320 may include a second pin gear 323 or a second link structure 327. The second pin gear 323 may be rotatably coupled to the hinge cover 301. The second link structure 327 may be dynamically connected to the second pin gear 323. The second link structure 327 may be configured to provide a force for moving the fourth sub housing portion 223 in the direction away from or close to the third sub housing portion 221 based on the rotation of the second pin gear 323.

According to an embodiment, the second hinge structure 320 may further include a second rotation gear 321, a second connecting gear 322, or a second guide gear 325. The second rotation gear 321 may be rotatably coupled to the hinge bracket 303. The second rotation gear 321 may be coupled to the third sub housing portion 221. The second connecting gear 322 may be connected to the second rotation gear 321 and the second pin gear 323. The second guide gear 325 may be connected to the second pin gear 323 and the second link structure 327.

While the disclosure has been shown and described with reference to exemplary embodiments thereof, it will be apparent to those of ordinary skill in the art that various changes in form and detail may be made thereto without departing from the scope of the disclosure as defined by the following claims.

## Claims

1. An electronic device (101) comprising:
a first housing (210) including a first sub housing portion (211) and a second sub housing portion (213) configured to move with respect to the first sub housing portion (211);
a second housing (220);
a first hinge assembly (300) disposed between the first housing (210) and the second housing (220), and configured to rotatably connect the first housing (210) and the second housing (220); and
a flexible display (240) disposed on the first housing (210) and the second housing (220),
**characterized in that** the first hinge assembly (300) includes:
a hinge cover (301);
a hinge bracket (303) disposed on the hinge cover (301);
a first rotation gear (311) disposed on the hinge bracket (303), coupled to the first sub housing portion (211) and configured to rotate with respect to the hinge bracket (303) as a rotation of the first housing (210);
a first connecting gear (312) connected to the first rotation gear (311) and configured to rotate as a rotation of the first rotation gear (311);
a first pin gear (313) rotatably coupled to the hinge cover (301), connected to the first connecting gear (312) and configured to rotate as a rotation of the first connecting gear (312);
a first guide (315) connected to the first pin gear (313) and configured to linearly move in a direction parallel to a rotational axis of the first pin gear (313) as a rotation of the first pin gear (313); and
a first link structure (317) connected to the first guide (315) and configured to provide a force to move the second sub housing portion (213) in a direction away from or close to the first sub housing portion (211) as a movement of the first guide (315),
wherein the first pin gear (313) includes a first slit (3131) formed to be recessed in an outer circumferential surface of the first pin gear (313) and extending in a spiral direction, and
wherein the first guide (315) includes a first protruding portion (3151) protruding from at least a portion of the first guide (315) and inserted in the first slit (3131).

2. The electronic device of claim 1, wherein the first guide (315) further includes a first guide opening (3152) formed to be penetrated in another portion of the first guide (315), and
wherein the first link structure (317) includes a first inserted portion (3172) disposed in the first guide opening (3152).

3. The electronic device of any one of claims 1 to 2, wherein the first link structure (317) further includes:
a first-first fixed portion (3171) coupled to the first sub housing portion (211); and
a first-second fixed portion (3173) coupled to the second sub housing portion (213).

4. The electronic device of any one of claims 1 to 3, wherein the second housing (220) includes a third sub housing portion (221) and a fourth sub housing portion (223) configured to move with respect to the third sub housing portion (221);

5. The electronic device claim 4, wherein the first hinge assembly (300) includes:
a second pin gear (323) rotatably coupled to the hinge cover (301); and
a second link structure (327) dynamically connected to the second pin gear (323) and configured to provide a force to move the fourth sub housing portion (223) in a direction away from or close to the third sub housing portion (221) based on a rotation of the second pin gear (323).

6. The electronic device of claim 5, wherein the first hinge assembly (300) further includes:
a second rotation gear (321) rotatably coupled to the hinge bracket (303) and coupled to the third sub housing portion (221);
a second connecting gear (322) connected to the second rotation gear (321) and the second pin gear (323); and
a second guide (325) connected to the second pin gear (323) and the second link structure (327).

7. The electronic device of any one of claims 1 to 6, wherein the flexible display (240) includes:
a first folding area (244) disposed on the first hinge assembly (300);
a first display area (241) connected to the first folding area (244) and disposed on the first housing (210); and
a second display area (242) connected to the first folding area (244) and disposed on the second housing (220).

8. The electronic device of any one of claims 4 to 6, wherein the flexible display (240) further includes:
a first folding area (244) disposed on the first hinge assembly (300);
a first display area (241) connected to the first folding area (244) and disposed on the first housing (210);
a second display area (242) connected to the first folding area (244) and disposed on the second housing (220); and
a second extended area (247) extending from the second display area (242), and
wherein when the fourth sub housing portion (223) is moved in the direction away from the third sub housing portion (221), at least a portion of the second extended area (247) is configured to move to an outside of the fourth sub housing portion (223) from an inside of the fourth sub housing portion (223).

9. The electronic device of any one of claims 7 to 8, wherein the flexible display (240) further includes a first extended area (246) extending from the first display area (241), and
wherein when the second sub housing portion (213) is moved in the direction away from the first sub housing portion (211), at least a portion of the first extended area (246) is configured to move to an outside of the second sub housing portion (213) from an inside of the second sub housing portion (213).

10. The electronic device of any one of claims 1 to 9, further comprising:
a third housing (230); and
a second hinge assembly (400), wherein at least part of the second hinge assembly (400) is connected to the second housing (220) and the third housing (230).

11. The electronic device of any one of claims 7 to 9, further comprising:
a third housing (230); and
a second hinge assembly (400), wherein at least part of the second hinge assembly (400) is connected to the second housing (220) and the third housing (230),
wherein the flexible display (240) further includes:
a third display area (243) disposed on the third housing (230); and
a second folding area (245) disposed on the second hinge assembly (400) and connected to the second display area (242) and the third display area (243).

12. The electronic device of any one of claims 1 to 11, further comprising a display support member (250) configured to support the flexible display (240).

## Patentansprüche

1. Elektronische Vorrichtung (101), umfassend:
ein erstes Gehäuse (210), das einen ersten Teilgehäuseabschnitt (211) und einen zweiten Teilgehäuseabschnitt (213) beinhaltet, der dazu konfiguriert ist, sich in Bezug auf den ersten Teilgehäuseabschnitt (211) zu bewegen;
ein zweites Gehäuse (220);
eine erste Scharnieranordnung (300), die zwischen dem ersten Gehäuse (210) und dem zweiten Gehäuse (220) angeordnet ist und dazu konfiguriert ist, das erste Gehäuse (210) und das zweite Gehäuse (220) drehbar zu verbinden; und
eine flexible Anzeige (240), die an dem ersten Gehäuse (210) und dem zweiten Gehäuse (220) angeordnet ist,
**dadurch gekennzeichnet, dass** die erste Scharnieranordnung (300) Folgendes beinhaltet:
eine Scharnierabdeckung (301);
eine Scharnierhalterung (303), die an der Scharnierabdeckung (301) angeordnet ist;
ein erstes Drehzahnrad (311), das an der Scharnierhalterung (303) angeordnet ist, an den ersten Teilgehäuseabschnitt (211) gekoppelt ist und dazu konfiguriert ist, sich in Bezug auf die Scharnierhalterung (303) als eine Drehung des ersten Gehäuses (210) zu drehen;
ein erstes Verbindungszahnrad (312), das mit dem ersten Drehzahnrad (311) verbunden ist und dazu konfiguriert ist, sich als eine Drehung des ersten Drehzahnrads (311) zu drehen;
ein erstes Stiftzahnrad (313), das drehbar an die Scharnierabdeckung (301) gekoppelt ist, mit dem ersten Verbindungszahnrad (312) verbunden ist und dazu konfiguriert ist, sich als eine Drehung des ersten Verbindungszahnrads (312) zu drehen;
eine erste Führung (315), die mit dem ersten Stiftzahnrad (313) verbunden ist und dazu konfiguriert ist, sich linear in einer Richtung parallel zu einer Drehachse des ersten Stiftzahnrads (313) als eine Drehung des ersten Stiftzahnrads (313) zu bewegen; und
eine erste Verbindungsstruktur (317), die mit der ersten Führung (315) verbunden ist und dazu konfiguriert ist, eine Kraft bereitzustellen, um den zweiten Teilgehäuseabschnitt (213) in eine Richtung weg von oder nahe an den ersten Teilgehäuseabschnitt (211) als eine Bewegung der ersten Führung (315) zu bewegen,
wobei das erste Stiftzahnrad (313) einen ersten Schlitz (3131) beinhaltet, der so ausgebildet ist, dass er in einer Außenumfangsfläche des ersten Stiftzahnrads (313) ausgespart ist und sich in einer Spiralrichtung erstreckt, und
wobei die erste Führung (315) einen ersten vorstehenden Abschnitt (3151) beinhaltet, der von mindestens einem Abschnitt der ersten Führung (315) vorsteht und in den ersten Schlitz (3131) eingeführt ist.

2. Elektronische Vorrichtung nach Anspruch 1, wobei die erste Führung (315) ferner eine ersten Führungsöffnung (3152) beinhaltet, die dazu ausgebildet ist, in einem anderen Abschnitt der ersten Führung (315) durchdrungen zu werden, und
wobei die erste Verbindungsstruktur (317) einen ersten eingesetzten Abschnitt (3172) beinhaltet, der in der ersten Führungsöffnung (3152) angeordnet ist.

3. Elektronische Vorrichtung nach einem der Ansprüche 1 bis 2, wobei die erste Verbindungsstruktur (317) ferner Folgendes beinhaltet:
einen ersten ersten festen Abschnitt (3171), der an den ersten Teilgehäuseabschnitt (211) gekoppelt ist; und
einen ersten zweiten festen Abschnitt (3173), der an den zweiten Teilgehäuseabschnitt (213) gekoppelt ist.

4. Elektronische Vorrichtung nach einem der Ansprüche 1 bis 3, wobei das zweite Gehäuse (220) einen dritten Teilgehäuseabschnitt (221) und einen vierten Teilgehäuseabschnitt (223) beinhaltet, der dazu konfiguriert ist, sich in Bezug auf den dritten Teilgehäuseabschnitt (221) zu bewegen.

5. Elektronische Vorrichtung nach Anspruch 4, wobei die erste Scharnieranordnung (300) Folgendes beinhaltet:
ein zweites Stiftzahnrad (323), das drehbar an die Scharnierabdeckung (301) gekoppelt ist;
und
eine zweite Verbindungsstruktur (327), die dynamisch mit dem zweiten Stiftzahnrad (323) verbunden ist und dazu konfiguriert ist, eine Kraft bereitzustellen, um den vierten Teilgehäuseabschnitt (223) in eine Richtung weg von oder nahe an den dritten Teilgehäuseabschnitt (221) auf Grundlage einer Drehung des zweiten Stiftzahnrads (323) zu bewegen.

6. Elektronische Vorrichtung nach Anspruch 5, wobei die erste Scharnieranordnung (300) ferner Folgendes beinhaltet:
ein zweites Drehzahnrad (321), das drehbar an die Scharnierhalterung (303) gekoppelt ist und an den dritten Teilgehäuseabschnitt (221) gekoppelt ist;
ein zweites Verbindungszahnrad (322), das mit dem zweiten Drehzahnrad (321) und dem zweiten Stiftzahnrad (323) verbunden ist; und
eine zweite Führung (325), die mit dem zweiten Stiftzahnrad (323) und der zweiten Verbindungsstruktur (327) verbunden ist.

7. Elektronische Vorrichtung nach einem der Ansprüche 1 bis 6, wobei die flexible Anzeige (240) Folgendes beinhaltet:
einen ersten Klappbereich (244), der an der ersten Scharnieranordnung (300) angeordnet ist;
einen ersten Anzeigebereich (241), der mit dem ersten Klappbereich (244) verbunden ist und an dem ersten Gehäuse (210) angeordnet ist; und
einen zweiten Anzeigebereich (242), der mit dem ersten Klappbereich (244) verbunden ist und an dem zweiten Gehäuse (220) angeordnet ist.

8. Elektronische Vorrichtung nach einem der Ansprüche 4 bis 6, wobei die flexible Anzeige (240) ferner Folgendes beinhaltet:
einen ersten Klappbereich (244), der an der ersten Scharnieranordnung (300) angeordnet ist;
einen ersten Anzeigebereich (241), der mit dem ersten Klappbereich (244) verbunden ist und an dem ersten Gehäuse (210) angeordnet ist;
einen zweiten Anzeigebereich (242), der mit dem ersten Klappbereich (244) verbunden ist und an dem zweiten Gehäuse (220) angeordnet;
einen zweiten erweiterten Bereich (247), der sich von dem zweiten Anzeigebereich (242) erstreckt, und
wobei, wenn der vierte Teilgehäuseabschnitt (223) in die Richtung weg von dem dritten Teilgehäuseabschnitt (221) bewegt wird, mindestens ein Abschnitt des zweiten erweiterten Bereichs (247) dazu konfiguriert ist, sich von einer Innenseite des vierten Teilgehäuseabschnitts (223) zu einer Außenseite des vierten Teilgehäuseabschnitts (223) zu bewegen.

9. Elektronische Vorrichtung nach einem der Ansprüche 7 bis 8, wobei die flexible Anzeige (240) ferner einen ersten erweiterten Bereich (246) beinhaltet, der sich von dem ersten Anzeigebereich (241) erstreckt, und
wobei, wenn der zweite Teilgehäuseabschnitt (213) in die Richtung weg von dem ersten Teilgehäuseabschnitt (211) bewegt wird, mindestens ein Abschnitt des ersten erweiterten Bereichs (246) dazu konfiguriert ist, sich von einer Innenseite des zweiten Teilgehäuseabschnitts (213) zu einer Außenseite des zweiten Teilgehäuseabschnitts (213) zu bewegen.

10. Elektronische Vorrichtung nach einem der Ansprüche 1 bis 9, ferner umfassend:
ein drittes Gehäuse (230); und
eine zweite Scharnieranordnung (400), wobei mindestens ein Teil der zweiten Scharnieranordnung (400) mit dem zweiten Gehäuse (220) und dem dritten Gehäuse (230) verbunden ist.

11. Elektronische Vorrichtung nach einem der Ansprüche 7 bis 9,
ferner umfassend:
ein drittes Gehäuse (230); und
eine zweite Scharnieranordnung (400), wobei mindestens ein Teil der zweiten Scharnieranordnung (400) mit dem zweiten Gehäuse (220) und dem dritten Gehäuse (230) verbunden ist,
wobei die flexible Anzeige (240) ferner Folgendes beinhaltet:
einen dritten Anzeigebereich (243), der an dem dritten Gehäuse (230) angeordnet ist; und
einen zweiten Klappbereich (245), der an der zweiten Scharnieranordnung (400) angeordnet ist und mit dem zweiten Anzeigebereich (242) und dem dritten Anzeigebereich (243) verbunden ist.

12. Elektronische Vorrichtung nach einem der Ansprüche 1 bis 11, ferner umfassend ein Anzeigestützelement (250), das dazu konfiguriert ist, die flexible Anzeige (240) zu stützen.

## Revendications

1. Dispositif électronique (101) comprenant :
un premier boîtier (210) comprenant une première partie de sous-boîtier (211) et une deuxième partie de sous-boîtier (213) conçue pour se déplacer par rapport à la première partie de sous-boîtier (211) ;
un deuxième boîtier (220) ;
un premier ensemble charnière (300) disposé entre le premier boîtier (210) et le deuxième boîtier (220), et conçu pour relier de manière rotative le premier boîtier (210) et le deuxième boîtier (220) ; et
un dispositif d'affichage souple (240) disposé sur le premier boîtier (210) et le deuxième boîtier (220),
**caractérisé en ce que** le premier ensemble charnière (300) comprend :
un couvre-charnière (301) ;
un support de charnière (303) disposé sur le couvre-charnière (301) ;
un premier engrenage de rotation (311) disposé sur le support de charnière (303), couplé à la première partie de sous-boîtier (211) et conçu pour tourner par rapport au support de charnière (303) lors d'une rotation du premier boîtier (210) ;
un premier engrenage de liaison (312) relié au premier engrenage de rotation (311) et conçu pour tourner lors d'une rotation du premier engrenage de rotation (311) ;
un premier engrenage à broche (313) couplé de manière rotative au couvre-charnière (301), relié au premier engrenage de liaison (312) et conçu pour tourner lors d'une rotation du premier engrenage de liaison (312) ;
un premier guide (315) relié au premier engrenage à broche (313) et conçu pour se déplacer linéairement dans une direction parallèle à un axe de rotation du premier engrenage à broche (313) lors d'une rotation du premier engrenage à broche (313) ; et
une première structure à biellettes (317) reliée au premier guide (315) et conçue pour fournir une force destinée à déplacer la deuxième partie de sous-boîtier (213) dans une direction s'éloignant de la première partie de sous-boîtier (211) ou s'en rapprochant lors d'un mouvement du premier guide (315),
dans lequel le premier engrenage à broche (313) comprend une première fente (3131) formée de manière à être en retrait dans une surface circonférentielle externe du premier engrenage à broche (313) et s'étendant dans une direction en spirale, et
dans lequel le premier guide (315) comprend une première partie saillante (3151) faisant saillie d'au moins une partie du premier guide (315) et insérée dans la première fente (3131).

2. Dispositif électronique de la revendication 1, dans lequel le premier guide (315) comprend en outre une première ouverture de guide (3152) formée de manière à traverser une autre partie du premier guide (315), et
dans lequel la première structure à biellettes (317) comprend une première partie insérée (3172) disposée dans la première ouverture de guide (3152).

3. Dispositif électronique de l'une quelconque des revendications 1 à 2, dans lequel la première structure à biellettes (317) comprend en outre :
une première-première partie fixe (3171) couplée à la première partie de sous-boîtier (211) ; et
une première-seconde partie fixe (3173) couplée à la deuxième partie de sous-boîtier (213).

4. Dispositif électronique de l'une quelconque des revendications 1 à 3, dans lequel le deuxième boîtier (220) comprend une troisième partie de sous-boîtier (221) et une quatrième partie de sous-boîtier (223) conçue pour se déplacer par rapport à la troisième partie de sous-boîtier (221).

5. Dispositif électronique de la revendication 4, dans lequel le premier ensemble charnière (300) comprend :
un second engrenage à broche (323) couplé de manière rotative au couvre-charnière (301) ;
et
une seconde structure à biellettes (327) reliée dynamiquement au second engrenage à broche (323) et conçue pour fournir une force destinée à déplacer la quatrième partie de sous-boîtier (223) dans une direction s'éloignant de la troisième partie de sous-boîtier (221) ou s'en rapprochant sur la base d'une rotation du second engrenage à broche (323).

6. Dispositif électronique de la revendication 5, dans lequel le premier ensemble charnière (300) comprend en outre :
un second engrenage de rotation (321) couplé de manière rotative au support de charnière (303) et couplé à la troisième partie de sous-boîtier (221) ;
un second engrenage de liaison (322) relié au second engrenage de rotation (321) et au second engrenage à broche (323) ; et
un second guide (325) relié au second engrenage à broche (323) et à la seconde structure à biellettes (327).

7. Dispositif électronique de l'une quelconque des revendications 1 à 6, dans lequel le dispositif d'affichage souple (240) comprend :
une première zone de pliage (244) disposée sur le premier ensemble charnière (300) ;
une première zone d'affichage (241) reliée à la première zone de pliage (244) et disposée sur le premier boîtier (210) ; et
une deuxième zone d'affichage (242) reliée à la première zone de pliage (244) et disposée sur le deuxième boîtier (220).

8. Dispositif électronique de l'une quelconque des revendications 4 à 6, dans lequel le dispositif d'affichage souple (240) comprend en outre :
une première zone de pliage (244) disposée sur le premier ensemble charnière (300) ;
une première zone d'affichage (241) reliée à la première zone de pliage (244) et disposée sur le premier boîtier (210) ;
une deuxième zone d'affichage (242) reliée à la première zone de pliage (244) et disposée sur le deuxième boîtier (220) ; et
une seconde zone étendue (247) s'étendant à partir de la deuxième zone d'affichage (242),
et
dans lequel lorsque la quatrième partie de sous-boîtier (223) est déplacée dans la direction s'éloignant de la troisième partie de sous-boîtier (221), au moins une partie de la seconde zone étendue (247) est conçue pour se déplacer vers un extérieur de la quatrième partie de sous-boîtier (223) depuis un intérieur de la quatrième partie de sous-boîtier (223).

9. Dispositif électronique de l'une quelconque des revendications 7 à 8, dans lequel le dispositif d'affichage souple (240) comprend en outre une première zone étendue (246) s'étendant à partir de la première zone d'affichage (241), et
dans lequel, lorsque la deuxième partie de sous-boîtier (213) est déplacée dans la direction s'éloignant de la première partie de sous-boîtier (211), au moins une partie de la première zone étendue (246) est conçue pour se déplacer vers un extérieur de la deuxième partie de sous-boîtier (213) depuis un intérieur de la deuxième partie de sous-boîtier (213).

10. Dispositif électronique de l'une quelconque des revendications 1 à 9, comprenant en outre :
un troisième boîtier (230) ; et
un second ensemble charnière (400), dans lequel au moins une pièce du second ensemble charnière (400) est reliée au deuxième boîtier (220) et au troisième boîtier (230).

11. Dispositif électronique de l'une quelconque des revendications 7 à 9, comprenant en outre :
un troisième boîtier (230) ; et
un second ensemble charnière (400), dans lequel au moins une pièce du second ensemble charnière (400) est reliée au deuxième boîtier (220) et au troisième boîtier (230),
dans lequel le dispositif d'affichage souple (240) comprend en outre :
une troisième zone d'affichage (243) disposée sur le troisième boîtier (230) ; et
une deuxième zone de pliage (245) disposée sur le second ensemble charnière (400) et reliée à la deuxième zone d'affichage (242) et à la troisième zone d'affichage (243).

12. Dispositif électronique de l'une quelconque des revendications 1 à 11, comprenant en outre un élément de support de dispositif d'affichage (250) conçu pour supporter le dispositif d'affichage souple (240).
